# EUROPÄISCHE PATENTANMELDUNG

(11) **EP 4 385 789 A1**
(43) Veröffentlichungstag der Anmeldung: **19.06.2024**
(21) Anmeldenummer: 23215941.8
(22) Anmeldetag: 12.12.2023
(51) Int. Cl.: B60L 3/04, B60L 58/10

(54) **SICHERHEITSVORRICHTUNG UND SICHERHEITSVERFAHREN MIT EINER TRENNEINHEIT FÜR DIE BATTERIE EINES ELEKTRISCH ANGETRIEBENEN KRAFTFAHRZEUGS**

(30) Priorität: 12.12.2022 DE 202022106939 U; 12.12.2022 DE 202022106940 U
(71) Anmelder: hofer powertrain innovation GmbH, 72622 Nürtingen (DE)
(72) Erfinder: Wollschlaeger, David, 72622 Nürtingen (DE); Ebinger, Günter, 76684 Östringen (DE); Mittelbach, Patrick, 8561 Hitzendorf (CH); Knapp, Marco, 70191 Stuttgart (DE); Böhm, Kai André, 71672 Marbach (DE); Sluka, Gerold, 72622 Nürtingen (DE)
(74) Vertreter: Cremer & Cremer

(57) **Zusammenfassung**

Elektrisch angetriebene Kraftfahrzeuge 3 werden sicherer, wenn diese eine Trennbox 25 ("BDU") als integrierten Bestandteil des Traktionsakkumulators 21 des Kraftfahrzeugs 3 haben, wobei die Trennbox 25 als Ort der Messaufnahme für Parameter des Traktionsackumulators 3 und als Ort der Messaufnahme der für den Antrieb bzw. des Antriebsstrangs 5 zur Verfügung stehenden elektrischen Leistungen gestaltet sein kann, während die übrigen Steuereinheiten 31 für komplexere Auswertungen der Messparameter und der Messwerte gestaltet sein können.

## Beschreibung

Die vorliegende Erfindung behandelt eine Sicherheitsvorrichtung, die für die Anwendung in einem elektrisch angetriebenen Fahrzeug entworfen worden ist.

Des Weiteren behandelt die vorliegende Erfindung ein Verfahren zum sicheren und schnellen Trennen von Hochvoltleitungen, insbesondere in einem Fehlerfall.

Mit anderen Worten, die vorliegende Erfindung behandelt eine Sicherheitsvorrichtung nach dem Oberbegriff von Anspruch 1 sowie ein Verfahren zur Steuerung eines Kraftfahrzeugs, insbesondere seiner Sicherheitsvorrichtung im Antriebsstrang, nach dem Oberbegriff von Anspruch 16.

### Technisches Gebiet

(Kraft-)Fahrzeuge, die als Antriebsmotor, der auch als Traktionsmotor adressiert wird, einen oder mehrere elektrische Motoren haben, beziehen die Antriebsenergie häufig aus "on-board-Traktionsakkumulatoren" (vereinfacht auch als "Traktionsakkumulator bezeichnet), der im vollgeladenen Zustand Energien von, je nach Auslegung des (Kraft-)Fahrzeuges und je nach Gestaltung des Traktionsakkumulators, bis zu 300 kWh (große PKW-Systeme), gelegentlich sogar bis zu 500 kWh (LKW-System) und eventuell sogar von 700 kWh (Schwerlast-System) besitzt. Würde eine Person die elektrisch leitfähigen Kontakte eines solchen Akkumulators berühren, so dürfte, insbesondere aufgrund der Tatsache, dass der Traktionsakkumulator seine elektrische Energie in Form einer Gleichspannung darbietet, die Berührung für die Person tödlich sein. Aus diesem Grund sind Antriebsstränge in Elektro-Kraftfahrzeugen so gestaltet, dass die (Sammel-)Kontakte am Traktionsakkumulator für die elektrische Versorgung des Antriebsstrangs durch eine Trennbox, die eingedeutscht auch häufig als "Battery Disconnect Unit" (abgekürzt auch als "BDU" bezeichnet) adressiert wird, spannungsmäßig tot gesetzt werden können.

Eine solche Trennbox hat vorrangig die Aufgabe, im aufladungslosen Stillstand des Fahrzeugs die Hochvoltleitungen des Fahrzeugs spannungslos zu schalten, im Betrieb einen niederohmigen Kontakt von den Traktionsakkumulatoren-Kontakten zu den Hochvolt-Leitungen des Fahrzeugs zu garantieren und im Fall der elektrischen Aufladung des Traktionsakkumulators diesen niederohmigen Kontakt auch in umgekehrter Stromflussrichtung sicherzustellen.

### Stand der Technik

Dementsprechend beschäftigt sich die Schutzrechtsliteratur auch immer wieder mit "BDUs" und ihrer Einbindung in elektrische Antriebssysteme.

Beispielsweise beschreibt die CN 106 786 988 A (Anmelderin: Chengdu Raja New Energy Automobile Science & Tech Co. Ltd.; Veröffentlichungstag: 31.05.2017) eine sog. "Hochvolt-Box", angeordnet zwischen "Lade- und Entladevorrichtung", die auf Basis einer "ursprünglichen" Steuerlogik zum Ein-Aus-Schalten der positiven und der negativen Stromschienen dienen soll. Eingangs der Beschreibung wird das Einsatzgebiet "Schutz von "battery packs" elektrischer Fahrzeuge" kurz angesprochen. Das Schalten soll mittels eines positiven Hauptrelais und mittels eines negativen Hauptrelais erfolgen. Allerdings wird in der CN 106 786 988 A nicht angegeben, wo genau geschaltet werden soll. Es wird lediglich erläutert, dass die Relais mittels CAN-Bus von einem Relais-Signal aus einem Batteriemanagementsystem (BMS) ansteuerbar sein sollen. Dabei setzt die Druckschrift die Komponente "BMS" als gängige und bekannte Komponente voraus. Das "BMS" soll alle Zustandsdaten des "battery pack" sammeln und an eine übergeordnete Software, die auf einem "PC" laufen soll, in Echtzeit übermitteln. In dem "PC" sollen die Daten analysiert werden. Schaltbefehle können dann von dem PC zum BMS und dort dann zur Weitergabe durch das BMS geschickt werden. Das BMS selbst kann, um einen Schutz vor Überlastungen zu garantieren, durch ein auf ihm laufendes Anwendungsprogramm das Relais in der Hochvolt-Box unterbrechen.

Auch recht aufschlussreich ist die EP 3 413 392 A1 (Anmelderin: LG Chem, Ltd.; Veröffentlichungstag: 12.12.2018), die eine "BDU" anhand ihres Anspruchs 1 beschreibt, wobei zusätzlich zu der BDU eine "control unit" in dem Fahrzeug vorhanden sein soll, sodass über einen CAN-Bus Daten eines "battery management systems" (abgekürzt auch als "BMS" bezeichnet) an die "control unit" übermittelt werden können. Das BMS soll sowohl einen Ladezustand (in der Fachwelt auch "SOC" genannt) und einen Gesundheitszustand (in der Fachwelt auch als "SOH" genannt) berechnen und an die Zentraleinheit "control unit" übermitteln.

Des Weiteren ist die EP 3 965 207 A1 (Anmelderin: Samsung SDI Co., Ltd.; Offenlegungstag: 09.03.2022) zu erwähnen, die ebenfalls von einer vorhandenen BDU und von einem vorhandenen "battery system management" (statt "BMS" nennt die EP 3 96 207 A1 jene Elektronikeinheit "BSM") ausgeht. In Anbetracht der in den zurückliegenden Jahren sich kontinuierlich erhöhenden Leistungen, die über die BDU geführt werden sollen, meint die EP 3 965 207 A1, die BDU müsse mit einem Tragplattensystem ausgestattet werden, damit aufgrund dieses Tragplattensystems eine Kühlflüssigkeit die BDU zum Kühlen durchströmen könne.

Die US 2022/278 520 A1 (Anmelderin: Melexis Technologies SA; Offenlegungstag: 01.09.2022) stellt einen Kontaktierer vor, der in vergleichbaren Schutzrechten üblicherweise als BDU bezeichnet wird. Der Kontaktierer soll dafür ausgelegt sein, Spannungen von bis zu 800 V und Ströme von bis zu 3.000 Ampere durchleiten zu können (also bis zu 2,4 MW). Weil solche Energien eine immanente Gefahr für die Passagiere eines Fahrzeugs darstellen, in dem eine diese Energien liefernde Batterie verbaut ist, soll der Kontaktierer Fehlfunktionen innerhalb von 5 ms unterbinden können. Die Hochvolt-Strecke des Kontaktierers wird mit einem magnetischen Sensor überwacht. An der Batterie ist unmittelbar ein BMS vorgesehen. Der Kontaktierer soll mit einer externen elektronischen Kontrolleinheit kommunizieren. Die Batterieüberwachung erfolgt also, wie in vielen anderen Energieversorgungssystemen für Kraftfahrzeuge, batterienah durch ein BMS. Im Fall einer Fehlfunktion soll der Kontaktierer nur einen Hochvolt-Schalter schalten können.

Einen weiteren interessanten Stand der Technik stellt die DE 10 2004 051 489 B4 (Inhaberin: Kromberg & Schubert GmbH & Co. KG; Veröffentlichungstag: 17.08.2006) dar. Eine in der DE 10 2004 051 489 B4 beschriebene intelligente Sicherheits-Anschlussvorrichtung, die als einteiliges Element ausgebildet sein soll, soll kraftschlüssig mit dem einen Batteriepol "Plus-Pol" verbunden werden. Die Anschlussvorrichtung soll Teil eines elektrischen Moduls sein, das eine Messschaltung für das Messen einer anliegenden Spannung umfasst, wobei Messdaten eines messtechnisch erfassten, durchfließenden Stroms an eine Auswerte- bzw. Steuereinheit weitergeleitet werden sollen. Mindestens ein elektrischer Schalter soll zum lösbaren Kontaktieren eines abgehenden elektrischen Leiters in der Anschlussvorrichtung integriert sein, es wird aber auch von mehreren vorhandenen Halbleiterschaltelementen in der Beschreibung gesprochen. Eine externe Einheit soll Informationen bereitstellen können, die zur Ansteuerung des wenigstens einen Schalters dienen sollen. Eine Verbindung zwischen der externen Einheit und dem elektrischen Modul kann als LIN-Bus oder CAN-Bus ausgebildet sein. Mit einem solchen elektrischen Modul kann nur ein Pol weggeschaltet werden. Die Batterie bleibt über den anderen Pol mit dem restlichen Fahrzeug elektrisch verbunden.

Die EP 3 890 059 A1 (Anmelderin: Samsung SDI Co., Ltd.; Veröffentlichungstag: 06.10.2021) stellt in ihrer einzigen Figur ein Batteriesystem vor, das ein Batteriepack und eine BDU ("battery disconnect unit") umfassen soll. Die BDU hat einen Hochvoltabschnitt und einen Niedervoltabschnitt. Eine Echtzeituhr soll im Niedervoltabschnitt eingebaut sein, aber auch aus dem Hochvoltabschnitt, neben dem Niedervoltabschnitt, versorgt werden. Auf diese Weise könne dem Batteriesystemmanagement eine richtige Uhrzeit zur Verfügung gestellt werden, die sozusagen die Systemzeit für das gesamte Batteriesystem ist.

Die DE 10 2014 202 504 A1 (Anmelderin: Robert Bosch GmbH; Veröffentlichungstag: 13.08.2015) stellt eine Trenneinheit vor, die durch wenigstens ein Schaltmodul, durch wenigstens ein Erfassungsmodul und durch wenigstens ein Steuermodul, also durch drei Module modular realisiert sein soll. Sowohl zum Schaltmodul als auch zum Erfassungsmodul werden verschiedene, recht einfache Schaltungen variiert. Die Trenneinheit soll außerdem wenigstens eine Schnittstelle besitzen, über die mit einer weiteren Steuereinheit kommuniziert werden kann. Das modulare Schaltungskonzept soll den Verdrahtungsaufwand der Trenneinheit reduzieren.

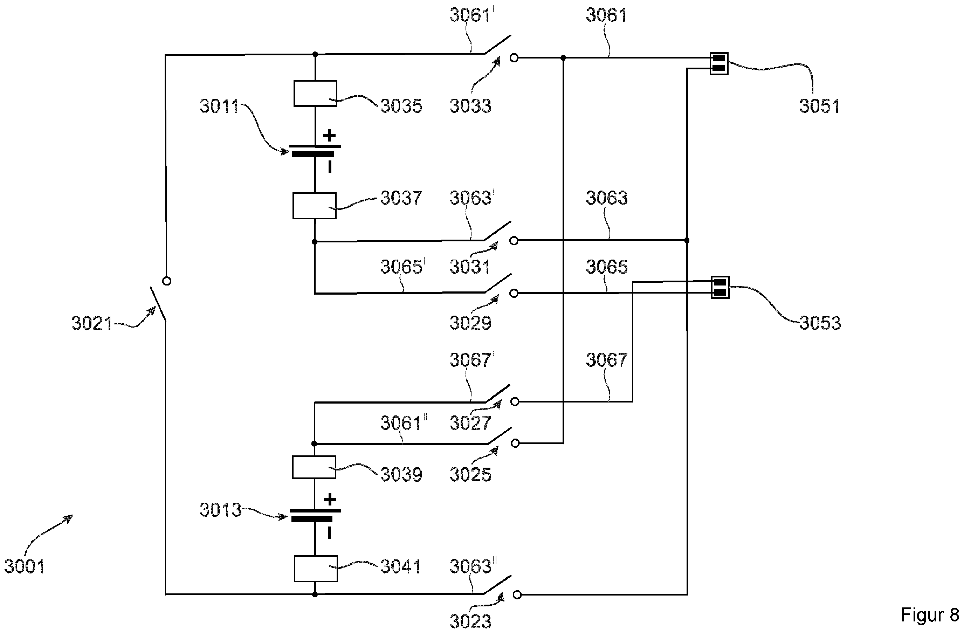

Die CN 105 392 674 A (Anmelderin: TS CORPORATION; Veröffentlichungstag: 03.09.2016) stellt ein Energieversorgungssystem eines Kraftfahrzeugs vor, das ein Batteriemanagementsystem und eine kastenartige Trenneinheit umfasst. Die Logik zur Überwachung der Zellen des Batteriepacks soll in dem Batteriemanagementsystem liegen. Die als block abgebildete Trenneinheit soll extern angeordnet werden, was auch anhand von Figur 8 zu sehen sei.

Die CN 112 550 067 A (Anmelderin: Shanghai G Pulse Tech Co. Ltd.; Veröffentlichungstag: 26.03.2021) ist derart abgefasst, dass sie weder sehr konkret noch äußerst abstrahiert eine "battery disconnect unit" ("BDU") behandelt. Ein Schwerpunkt der chinesischen Anmeldung ist die Anordnung von Batterieüberwachungseinheiten in einer Daisy-Chain-Serienschaltung, zu der parallel zum ersten Daisy-Chain-Knoten eine "Parameter-Akquisitions-Einheit" zu platzieren sei. Ein Bus zwischen einem Port A und einem Port B soll als zweipoliger "Daisy-Chain-Bus" ausgeführt sein, folglich muss es "wenigstens zwei elektrische Kontakte" in einer in der CN 112 550 067 A beschriebenen Vorrichtung geben.

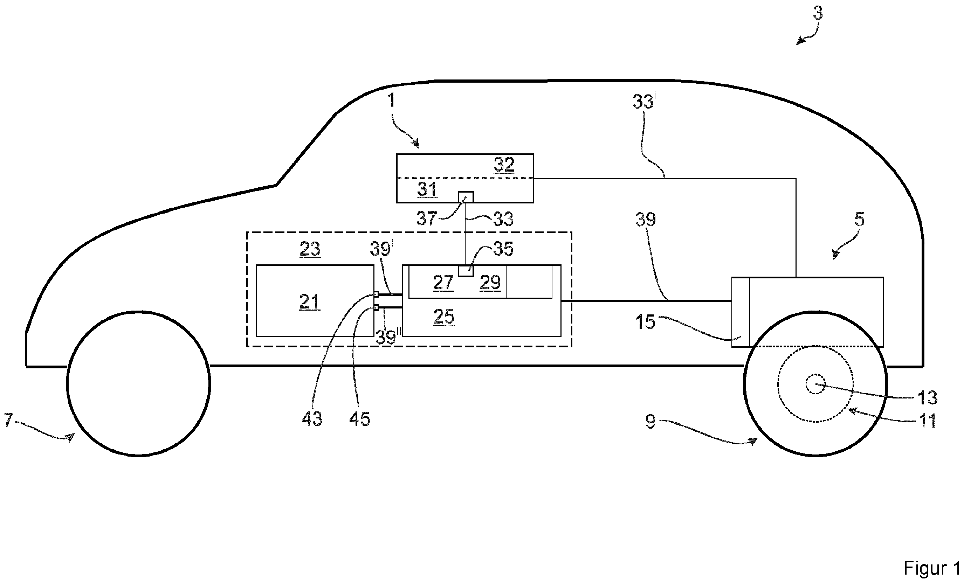

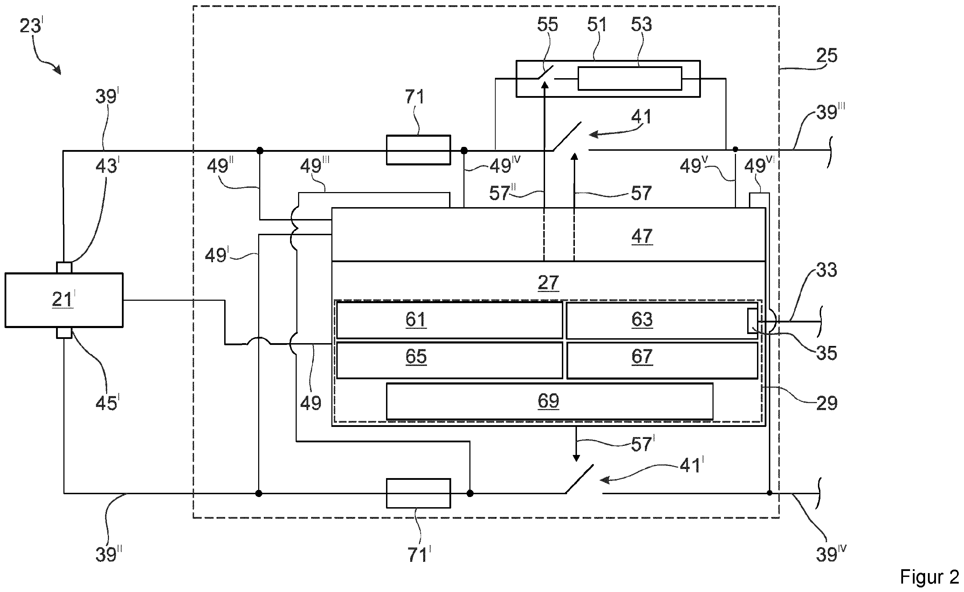

Die DE 10 2011 086 495 A1 (Anmelderin: Continental Automotive GmbH; Veröffentlichungstag: 16.05.2013) behandelt in ihrer allgemeinen Erfindungsbeschreibung zahlreiche Fehlerfälle für "ihre Schütze", wie "Überstrombelastungen", wie "zu geringe Isolationswiderstände" oder wie "Masseschleifen", und überträgt dann jene allgemeine Ausführungen auf zwei, in den Figuren 1 und 2 gezeigten "Ausführungsvarianten". Über beiden Varianten der DE 10 2011 086 495 A1, jener in der Figur 1 dargestellten und jener in der Figur 2 dargestellten, stehen die in der allgemeinen Erfindungsbeschreibung benutzten Schlagworte "aus Sicherheitsgründen eine Schalteinrichtung vorzusehende" "Elektromechanik-Box". Das zweite Ausführungsbeispiel, das in Figur 2 dargestellt ist, behandelt eine "Elektromechanik-Box", bei der die in jener Patentanmeldung so bezeichnete "aufwendigere" Elektronik einer Mikrokontrollereinheit in einer zentralen Rechnereinheit im Energiespeicher platziert ist. In der in Figur 1 gezeigten Variante soll die zentrale Rechnereinheit zur Auswertung von Messungen in der "Elektromechanik-Box" angeordnet sein. In beiden Ausführungsbeispielen wird die "Elektromechanik-Box" nicht unmittelbar an dem Traktionsakkumulator des Fahrzeugs angebracht. Tatsächlich zeigen die Figuren sogar absetzende Leitungen zwischen Akkumulator und "Elektromechanik-Box". Trotz des in den Vordergrund gerückten Themas "Sicherheit" scheinen daher immer noch zahlreiche weitere Maßnahmen notwendig zu sein, um die in der DE 10 2011 086 495 A1 behandelte "Elektromechanik-Box" sowie die elektrische Energieversorgung des Antriebsstrangs sicherer zu gestalten.

Auch beschäftigt sich die Schutzrechtsliteratur mit verschiedenen Umschaltsystemen, die mit einer Reihe von Schaltern arbeiten. Teilweise arbeiten die Umschaltsysteme mit ihren Akkumulatoren zusammen, die dafür ausgelegt sind, Spannungen unterschiedlicher Niveaus beim Laden und/oder im Antriebsbetrieb zu akzeptieren.

Beispielhaft mögen die folgenden, aufschlussreichen Umschaltvorrichtungen bzw. Umschaltsysteme aus den nachfolgend aufgelisteten Schutzrechtsdokumenten angeführt werden:
- DE 10 2016 207 272 A1 (Anmelderin: Bayerische Motoren Werke Aktengesellschaft; Offenlegungstag: 02.11.2017),
- US 10 870 367 B2 (Inhaberin: Bayerische Motoren Werke Aktiengesellschaft; Erteilungstag: 22.12.2020),
- DE 10 2016 224 005 A1 (Anmelderin: Audi AG; Offenlegungstag: 07.06.2018),
- DE 10 2019 105 890 A1 (Anmelderin: GM Global Technology Operations LLC; Offenlegungstag: 19.09.2019),
- EP 3 687 028 A1 (Anmelderin: Iveco S.p.A.; Offenlegungstag: 29.07.2020),
- US 10 974 617 B2 (Inhaberin: Toyota Jidosha Kabushiki Kaisha; Erteilungstag: 13.04.2021),
- DE 10 2017 214 580 A1 (Anmelderin: Yazaki Corporation; Offenlegungstag: 01.03.2018),
- DE 10 2016 008 263 A1 (Anmelderin: Daimler AG, Offenlegungstag: 16.02.2017),
- EP 3 481 675 A1 (Anmelderin: Daimler AG; Offenlegungstag: 11.01.2018),
- DE 41 07 391 A1 (Anmelderin: ABB Patent GmbH; Offenlegungstag: 10.09.1992),
- US 2014/042 807 A1 (Anmelderin: Valeo Systemes de Controle Moteur; Offenlegungstag: 13.02.2014) und
- EP 2 527 186 A2 (Anmelderin: ZF Friedrichshafen AG; Offenlegungstag: 28.11.2012).

Viele der oben aufgeführten Dokumente konzentrieren sich darauf, wie die richtige Spannung an irgendeiner Stelle des Kraftfahrzeugs bzw. an einem Motor anstehen kann. Sicherheitsaspekte treten dabei häufig in den Hintergrund.

Die zuvor genannten Druckschriften gelten mit ihrer Benennung als vollumfänglich in vorliegende Erfindungsbeschreibung inkorporiert. Hierdurch soll vermieden werden, dass erneut und wiederholt allgemein bekannte Zusammenhänge zwischen "Batterie-Pol", "BDU", "BMS", "zentralem Steuergerät", "Hochvolt-Box" und ihren Anschlüssen und Schnittstellen erörtert werden müssen, sondern die Begriffe wie "BDU", "BMS" bzw. "BSM", "zentrales Steuergerät" und "Hochvolt-Box" sollen durch Verweis auf die Druckschriften als ebenfalls definiert für vorliegende Erfindung angesehen werden dürfen.

Legt man einen Schwerpunkt der Betrachtung auf die möglichen Fehlerfälle und auf die Verteilung der Logiken in dem Kfz-Energieversorgungssystem, so mag die DE 10 2011 086 495 A1 als nächst kommender Stand der Technik anzusehen sein.

### Aufgabenstellung

Aus Sicherheitserwägungen ist eine BDU ("Battery Disconnect Unit" bzw. Trennbox) in elektrisch angetriebenen Kraftfahrzeugen wünschenswert. Hierbei gehen aber erhebliche Entwicklungsressourcen darauf, die einzelnen Komponenten eines Antriebstrangs eines elektrisch angetriebenen Kraftfahrzeugs aufeinander abzustimmen. Dies kann darauf zurückgeführt werden, dass jede Komponente (z. B. eine erste Steuereinheit und eine zweite Steuereinheit) ihre proprietären Anschlüsse, Schnittstellen und Software-Module haben.

Wünschenswert wäre es, eine zuverlässige BDU zu besitzen, die eingebunden in eine Steuergeräteschar es den übrigen Steuergeräten (Steuereinheiten) erlaubt, ihre proprietären Funktionen vollumfassend wahrzunehmen, aber trotzdem zahlreiche Risiken und Gefahren, insbesondere für Passagiere, Fahrer und Mechaniker des Kraftfahrzeugs, abzufangen.

### Erfindungsbeschreibung

Die erfindungsgemäße Aufgabe wird durch eine Sicherheitsvorrichtung nach Anspruch 1 gelöst, ein geeignetes Sicherheitsverfahren lässt sich Anspruch 16 entnehmen. Vorteilhafte Weiterbildungen lassen sich den abhängigen Ansprüchen entnehmen.

Wie eingangs angesprochen, bedürfen elektrisch angetriebene (Kraft-)Fahrzeuge einer Sicherheitsvorrichtung, damit die großen elektrischen Energien, die in dem Traktionsakkumulator, wenn dieser geladen ist, gespeichert sind, nicht unkontrolliert abgegeben werden können. Hierfür hat das Fahrzeug eine Trennbox, die vorzugsweise unmittelbar an dem Traktionsakkumulator angeschlossen ist und hierdurch eine direkte Berührung der Pole (sowohl Plus-Pol als auch Minus-Pol) bzw. der Kontakte des Traktionsakkumulators verhindert.

Idealerweise erfasst die Trennbox aber auch gefährdende Ladephasen und Ladungszustände.

Die Trennbox umfasst eine Recheneinheit. Zu der Trennbox gehört auch ein Kommunikationsbusanschluss, an dem ein Kommunikationsbus, wie z. B. ein CAN-Bus, angeschlossen werden kann. Die Recheneinheit ist vorteilhafterweise Teil einer größeren Steuereinheit, zu der z. B. auch Messeingänge und elektrisch zu betätigende Aktuatoren gehören können.

Die Trennbox ist, wie gesagt, so gestaltet, dass sie unmittelbar an Polen bzw. Kontakten des Traktionsakkumulators angebracht werden kann. Durch die Präsenz der Trennbox werden die Kontakte des Traktionsakkumulators verdeckt. Eine unmittelbare Berührung der Kontakte des Traktionsakkumulators wird durch die Trennbox verhindert. Somit ist eine unmittelbare Berührung der Kontakte des Traktionsakkumulators für einen Menschen nicht mehr möglich, solange die Trennbox am Traktionsakkumulator befestigt ist.

Eine der Aufgaben der Trennbox ist es, elektrische Energie bzw. elektrische Leistung aus dem Traktionsakkumulator an elektrische Verbraucher, wie z. B. an einen oder an mehrere Antriebsmotoren, weiterzuleiten bzw. durch sich durchzuleiten.

Außerdem kann die Trennbox Messwerte ermitteln, speichern, verarbeiten, aufbereiten und weitergeben, insbesondere über den Kommunikationsbus, der am Kommunikationsbusanschluss angeschlossen ist.

Soll die Trennbox die elektrische Energie nach außen nicht weiterleiten, so kann die Trennbox ihre Trennelemente (geeignete Trennelemente sind Schütze, Leistungsschalter, MOS-Fets, IGBTs oder dergleichen) in einen Schaltzustand versetzen, durch den eine Unterbrechung zwischen den primären Kontakten des Traktionsakkumulators und den Kontakten zur Weiterleitung der Hochspannung an Geräte außerhalb der Trennbox hergestellt ist. Befindet sich der Antriebsstrang bzw. das Kraftfahrzeug in einem Ladezustand (bzw. in einem Ladebetrieb), so gelten als primäre Kontakte die Anschlüsse der Trennbox, die mit der Ladespannung beaufschlagt sind. Anlässe für eine Unterbrechung der Verbindung von den Polanschlüssen zu den abgangsseitigen Anschlüssen der Trennbox können in der Trennbox selbst ermittelt werden, z. B. anhand von Messwerten (bzw. jedes einzelnen Messwerts), die (bzw. der) außerhalb eines akzeptablen Messbereichs liegen (liegt). Die Trennbox kann aber auch auf Ansteuerungen über den Kommunikationsbus reagieren und aufgrund von Leistungsanforderungen, aufgrund von Sicherheitsanforderungen oder aufgrund eines beabsichtigten Schutzes für den Traktionsakkumulator zumindest ein Trennelement, idealerweise alle Trennelemente, unterbrechen.

Bei Kraftfahrzeugen größerer Leistungsklassen ("SUVs", "Transportern" oder 'Schwerlastfahrzeugen") sollte die übertragbare und somit auch schaltbare Leistung im Kilo-Watt-Bereich, wenn nicht sogar im Mega-Watt-Bereich liegen. Die Trennbox sollte also in der Lage sein, eine sichere Trennung von elektrischen Leistungen ihrer Leistungsklasse durchzuführen (z. B. im Kilo-Watt-Bereich oder z. B. im Mega-Watt-Bereich).

Weil ein möglichst einfaches, aber zugleich zuverlässiges Messprogramm in der Recheneinheit abläuft, kann die erste Steuereinheit zuverlässige Messdaten, die zudem äußerst aktuell sind, wenn das Messprogramm möglichst abgespeckt ist, über den Kommunikationsbus den anderen Geräten am Kommunikationsbus zur Verfügung stellen. So können im Millisekundenbereich alle Messdaten mit ihren ggf. stabilisierten und auf Plausibilität geprüften Messwerten auf den Kommunikationsbus gelegt werden. Die erste Steuereinheit stellt allen Steuereinheiten am Kommunikationsbus die Messdaten zur Verfügung. Es obliegt der zweiten (und ggf. dritten sowie eventuell vierten) Steuereinheit, die Messwerte und Messdaten zu verwenden, die die zweite Steuereinheit für ihre Berechnungen, Vorhersagen und Zustandsbeobachtungen benötigt (z. B. Ladungszustand des Akkumulators ("SOC"), z. B. Gesundheitszustand des Akkumulators ("SOH")).

Mit anderen Worten, zu der Sicherheitsvorrichtung, die für eine elektrische Sicherheit in einem elektrisch angetriebenen Fahrzeug zuständig ist, gehört eine Trennbox und eine zweite Steuereinheit. Die Sicherheitsvorrichtung umfasst die Trennbox und die zweite Steuereinheit. Die erste Steuereinheit ist Teil der Trennbox.

Zu der ersten Steuereinheit, die ein Teil der Trennbox ist, gehören eine Recheneinheit, in der Steuerungsprogramme ablaufen können, und ein Kommunikationsbusanschluss. Die erste Steuereinheit umfasst eine Recheneinheit und einen Kommunikationsbusanschluss. Die Recheneinheit kann z. B. durch einen Mikrokontroller gebildet sein.

Die Trennbox ist so gestaltet, dass die Trennbox an dem Traktionsakkumulator angeschlossen werden kann. Die Trennbox ist dazu eingerichtet, unmittelbar an einem Traktionsakkumulator des Fahrzeugs angebracht zu werden. Hierdurch kann jeder der angeschlossenen elektrischen Kontakte vor einem unmittelbaren Zugriff geschützt werden. Elektrisch abgekoppelt sind die Kontakte (bzw. die Pole) des Traktionsakkumulators, wenn die elektrische Trennbox mit wenigstens zwei Trennelementen (z. B. IGBTs oder z. B. MOS-Fets) ausgestattet ist.

Sind die Trennelemente in einem geschlossenen Schaltzustand, sind diese für eine Durchleitung von elektrischer Leistung an ihre weiterführenden Kontakte da. Die Trennbox kann in den Schaltzustand "geschlossen" gebracht werden. Die Trennbox ist derart gestaltet, dass elektrische Energie durch die Trennbox fließen kann. Natürlich kann die Trennbox auch so arbeiten, dass nicht alle Trennelemente (gleichzeitig) in einem geschlossenen Zustand sind, sondern nur die Trennelemente, die in dem jeweiligen Schaltzustand für eine Weiterleitung elektrischer Energie benötigt werden (z. B. bei einem Ladebetrieb die Trennelemente vom Ladeanschluss zum Traktionsakkumulator; z. B. bei einem Fahrbetrieb die Trennelemente vom Traktionsakkumulator zum (Antriebs-)Motor).

Außerdem gibt es eine zweite Steuereinheit. Die Sicherheitsvorrichtung ist mit einer zweiten Steuereinheit ausgestattet; zu der Sicherheitsvorrichtung gehört eine zweite Steuereinheit. In der zweiten Steuereinheit ist vorteilhafterweise eine Auswertelogik implementiert.

Die Trennbox ist vorteilhafterweise so programmiert, dass sie eine selbständige Unterbrechung durchführen kann. Bei einer Unterbrechung kann keine Weiterleitung elektrischer Leistung erfolgen. Die Unterbrechung kann in Reaktion auf einen oder mehrere von der Trennbox ermittelten Messwerte erfolgen.

Günstigerweise ist die Trennbox mit solchen Bauteilen und Leiterbahnen ausgestattet, dass sie elektrische Leistungen im Bereich von Kilo-Watt und/oder im Bereich von Mega-Watt durchleiten kann.

Vorteilhafterweise ist die Trennbox mit wenigstens zwei Anschlüssen für das zeitgleiche Anschließen an wenigstens zwei elektrischen Kontakten des Traktionsakkumulators ausgestattet. Die Trennbox soll zugleich alle Pole des Traktionsakkumulators abdecken. Die Trennbox ist für ein allseitiges Anschließen gestaltet.

Die erste Steuereinheit ist, wie zuvor schon angeklungen, für die Ausführung eines Messprogramms in der Recheneinheit gestaltet. Durch das Messprogramm wird die Trennbox in die Lage versetzt, die Messsensoren der Trennbox und/oder die Messsensoren des Traktionsakkumulators in regelmäßigen Abständen einzulesen. Die Messwerte werden eingelesen, damit sie an dem Kommunikationsbusanschluss als Messwerte für die zweite Steuereinheit zur Verfügung gestellt werden.

Nachfolgend werden vorteilhafte Ausgestaltungen und Weiterbildungen dargelegt, die für sich gesehen, sowohl einzeln als auch in Kombination, ebenfalls erfinderische Aspekte offenbaren können.

Vorteilhafterweise ist die zweite Steuereinheit ein Niedervoltsteuergerät. Ein Niedervoltsteuergerät schafft die Möglichkeit, dass das Niedervoltsteuergerät für den Betrieb mit einer Niedervoltversorgungsspannung und für Niedervolteingangsspannungen an den Schnittstellen und Ports konzipiert ist. Günstige Spannungswertebereiche sind 0 Volt bis 5 Volt, 0 Volt bis 12 Volt oder 0 Volt bis 24 Volt. In diesem Wertebereich bewegen sich die Spannungen, die der zweiten Steuereinheit von außerhalb (also an den Anschlüssen) zur Verfügung gestellt werden können und die an Ausgängen der zweiten Steuereinheit anliegen bzw. zur Verfügung gestellt werden können. Mit anderen Worten, die zweite Steuereinheit ist ein Niedervoltsteuergerät, das vorzugsweise in einem Spannungsfeld bis in den Spannungsvoltwert von maximal 60 Volt, idealerweise von weniger als 24 Volt, operiert.

Die hierin vorgestellte technische Lösung trägt dazu bei, dass die zweite Steuereinheit eine peripheriefreie Steuereinheit sein kann. Die hierin vorgestellte technische Lösung trägt - in einer abgemilderten Ausführungsvariante - zumindest zur Reduktion der Eingänge und der Ausgänge an der zweiten Steuereinheit bei. Weil die zweite Steuereinheit aber noch andere Aufgaben wahrnehmen kann (neben der Funktion, eine Plattform für eine Auswertelogik zu sein), können die anderen Aufgaben und Funktionen eventuell Eingänge und Ausgänge an der zweiten Steuereinheit erfordern, z. B. wenn die zweite Steuereinheit (auch) ein Thermomanagementgerät ist. Die zweite Steuereinheit kann - in einer extremen Auslegung bzw. Designgestaltung - ohne jegliche Eingänge und Ausgänge (mit Ausnahme von Kommunikationsbusanschlüssen) gestaltet sein. Die Messwerte des Traktionsakkumulators und die Messwerte der Trennbox werden in der Trennbox aufbereitet. Aus diesem Grund benötigt die zweite Steuereinheit keine Eingänge, über die unmittelbar Messwerte des Traktionsakkumulators gemessen werden. Die Trennelemente werden von der Trennbox bedient bzw. betätigt. Somit kann die zweite Steuereinheit auch bei den Aktuatorenausgängen reduziert ausgeführt sein, z. B. keine Treiber zur Betätigung der Trennschalter. Die zweite Steuereinheit ist, wenn an Hardware-Ressourcen zu sparen ist, ein schaltausgangsfreies, insbesondere keine Treiber für Schaltausgänge aufweisendes, vorzugsweise ohne Aktuatorenschalter aufgebautes, Steuergerät. Soll die zweite Steuereinheit aber andere Aufgaben neben ihrer Funktion, eine Plattform für eine Auswertelogik zu sein, wahrnehmen, so kann die Steuereinheit hierfür die benötigten Aus- und Eingänge besitzen. Aufgrund der Funktion der Trennbox als Schnittstellengerät zur Erfassung der Messsignale der Hochvoltleitungen und des Traktionsakkumulators, können die weiteren Steuereinheiten von diesen Eingängen und Ausgängen entbunden bzw. entlastet sein.

Neben einer Niedervoltgruppe, d. h. einer Baugruppe für Niedervoltspannungen, hat die Trennbox, anders als idealerweise die zweite Steuereinheit, einen Hochvoltteil, in dem elektrische Spannungen in einem Bereich von mehr als 60 Volt geführt werden können. Die Trennbox umfasst einen Hochvoltteil, also einen Teil für elektrische Spannungen in einem Bereich von mehr als 60 Volt. Wird das Niedervoltteil bzw. die Niedervoltgruppe aus einer eigenen Batterie bzw. einem eigenen Akkumulator versorgt, so kann die Trennbox, zumindest die Steuereinheit in der Trennbox, zu einem Zeitpunkt bereits Messungen und Überwachungen durchführen, zu der die Hochvoltleitungen und damit viele Bereiche des Fahrzeug noch spannungslos sind.

Die Rechenvorgänge, die innerhalb der Sicherheitsvorrichtung abgewickelt bzw. durchgeführt (es kann auch gesagt werden: vorgenommen) werden, können in hochsicherheitsrelevante Vorgänge auf der einen Seite und in Berechnungen, Algorithmen und Vorgänge auf der anderen Seite unterteilt werden, die Zusatzinformationen erzeugen, ermitteln, bestimmen oder auf diesen Vorgängen, Berechnungen und Algorithmen Entscheidungen basieren. Eine derart gestaltete Auswertelogik, die in der zweiten Steuereinheit ablaufen kann, ist eine Auswertelogik, die eine Berechnung zu einem Ladungszustand des Traktionsakkumulators (was häufig durch "SOC des Akkumulators" abgekürzt wird) oder seiner Zellen (was häufig durch "SOC einer Akkumulatorzelle" abgekürzt wird) durchführt. Eine weitere Berechnung, die mithilfe einer Auswertelogik in der zweiten Steuereinheit durchgeführt werden kann, ist eine Gesundheitszustandsberechnung (was häufig durch "SOH" abgekürzt wird). Die für die Berechnung notwendigen Messwerte des Traktionsakkumulators und seiner (Akkumulator-)Zellen werden mithilfe der Trennbox über den Kommunikationsbus der zweiten Steuereinheit (und damit allen am Bus angeschlossenen Steuereinheiten) zur Verfügung gestellt. Natürlich können solche Berechnungen auch in einer dritten, falls vorhandenen, Steuereinheit (oder sogar in einer vierten vorhandenen Steuereinheit) durchgeführt werden. Als zweite Steuereinheit kann z. B. ein zentrales Fahrzeugsteuergerät (auch häufig als VCU abgekürzt) benutzt werden; während einzelne Zustandsberechnungen, Darstellungsweisen und Eingabeschnittstellen über ein Informationsvermittlungsgerät mit Steuereinheit durchführbar sind (z. B. über ein "Infotainment-System" mit einer Eingabeschnittstelle für Passagiere des Fahrzeugs). Die Auswertelogik befindet sich konzentriert in der zweiten Steuereinheit für eine Ladungszustandsberechnung und/oder für eine Gesundheitszustandsberechnung. Die Ladungszustandsberechnung und/oder die Gesundheitszustandsberechnung bestimmt den Zustand ("SOC" und/oder "SOH") des anschließbaren Traktionsakkumulators auf Basis von Messdaten der Trennbox.

Idealerweise ist ein Kommunikationsbus zwischen den Komponenten der Steuereinheit vorhanden, der an (nahezu) beliebig vielen Busteilnehmern vorbeigeführt werden kann. Ein in diesem Anwendungsgebiet vorteilhafterweise ausführbarer Bus ist z. B. ein CAN-Bus. Ein solcher (Fahrzeug-)CAN-Bus erlaubt es, mehrere Steuergeräte bzw. Steuereinheiten an den Bus anzuschließen. Der Kommunikationsbus kann ein Niedervoltkommunikationsbus sein. Ein Niedervoltkommunikationsbus kann z. B. als ein Zwei-Draht-Bus realisiert sein. Ein typischer Zwei-Draht-Bus ist ein CAN-Bus. Vorzugsweise ist der Niedervoltkommunikationsbus galvanisch getrennt gegenüber seinen Kommunikationsteilnehmern ausgeführt. Galvanische Trennbausteine können aber auch bezüglich einzelner Busteilnehmer bzw. Steuereinheiten eingespart werden. Soll die galvanische Trennung nicht in alle Steuereinheiten eingebaut sein, so ist vorteilhafterweise zumindest die galvanische Trennung zwischen Niedervoltkommunikationsbus und der (restlichen) Trennbox ausgeführt.

Sind die Bus-Teilnehmer galvanisch zu den Busleitungen getrennt, können sich die Busteilnehmer, d. h. die einzelnen Steuereinheiten, auf unterschiedlichen Spannungsniveaus befinden bzw. liegen.

In einer - bezogen auf Rechenkapazitäten - besonderen Vereinfachungsvariante ist die Trennbox nur mit solchen Programmen und Programmteilen (oder hartverdrahteten Schaltkreisen) ausgestattet, die eine unmittelbare Auswertung der Messwerte erlaubt, jedoch hat die Trennbox keine "höherintelligente", d. h. komplexere Auswertelogik. Die eigentliche Auswertelogik findet in der zweiten Steuereinheit (bzw. in weiteren Steuereinheiten) statt. Die Trennbox ist folglich ohne Schaltkreise und ohne Programmteile für eine Auswertelogik realisiert.

Messsignale, also Signale, die von einem Messsensor stammen, und eine Datenkommunikation können von der Trennbox be- bzw. verarbeitet werden. Vorzugsweise finden weitergehende Berechnungen auf Basis der Messwerte, außer eine Plausibilitätsprüfung und/oder eine Grenzwertprüfung der Messsignale bzw. der Messwerte, andernorts, d. h. in einer der weiteren Steuereinheiten statt. Auf diese Weise ist eine Notabschaltung sichergestellt. Die Logik, was aus den einzelnen Messwerten ausgewertet wird, kann jede Steuereinheit selbständig unternehmen. Die Messwerte stehen allen am Kommunikationsbus angeschlossenen Steuereinheiten gleichermaßen zur Verfügung.

Die Trennbox ist vorzugsweise dazu eingerichtet, Befehle zu bearbeiten oder zu verarbeiten. Die Befehle können über den Kommunikationsbus an die Steuereinheit kommen. Über den Kommunikationsbusanschluss der Trennbox werden die einzelnen Befehle angeboten. Wenigstens eines der Trennelemente wird aufgrund eines Befehls, der von außen kommen kann, in einen geöffneten Zustand versetzt; es gibt wenigstens einen Befehl für eine Schnellabschaltung. Durch den Befehl wird insbesondere der Traktionsakkumulator von den weiterführenden Kontakten getrennt.

Die Sicherheitsvorrichtung hat vorteilhafterweise eine Trennbox, die eine Vorladekomponente umfasst. Die Vorladekomponente kann eine Strompfadstrecke umfassen, die mit einem Widerstand ausgestattet ist. Die Strompfadstrecke ist insbesondere ein widerstandbehafteter, vorzugsweise schaltbarer, Strompfad. Über diese Strecke, über diesen Strompfad, kann ein Strom geleitet werden, der für ein Aufladen eines Zwischenkreiskondensators eines an den weiterführenden Kontakten anzuschließenden Spannungswandlers richtig eingestellt ist, d. h. ein strombegrenzter Ladungsstrom für den Zwischenkreiskondensator.

Günstig kann es gem. einer Ausführungsform auch sein, wenn die Trennbox eine Logik für ein Schalten wenigstens eines der Trennelemente aufweist. Besondere Vorteile kann die Trennbox ausspielen, wenn wenigstens zwei der Trennelemente aufgrund der Logik geschaltet werden. Ein allpoliges Abschalten ist auf diese Weise möglich. Wird eine ungünstige oder gefährliche oder unerwünschte Situation oder ein entsprechender Zustand detektiert, z. B. ein fehlerhafter externer Befehl, z. B. ein fehlerhafter Messwert, z. B. ein außerhalb von Toleranzgrenzen angesiedelter Messwert und/oder z. B. ein Fehlen eines Messwerts (nicht vorhandener Messwert), so ist ein Öffnen des wenigstens einen Trennelements sichergestellt, vorzugsweise innerhalb eines Zeitraums von weniger als 5 ms.

Die Sicherheitsvorrichtung kann so gestaltet sein, dass sowohl in der Trennbox als auch in der zweiten Steuereinheit Algorithmen implementiert sind, die eine Validierung bzw. Überprüfung des Traktionsakkumulators vornehmen. Die Trennbox führt vorrangig nur Grenzwertanalysen durch (Schwellwerttests). Außerdem sind die Rechenschritte beschränkt. Vorteilhafterweise werden nur Überprüfungen durchgeführt, die nicht mehr als 100 Takte der Prozessoreinheit umfassen. In wenigen Takten soll eine Grenzwertprüfung einzelner Messwerte durchgeführt werden. Unterdessen kann die zweite Steuereinheit mehr als 100 Takte umfassende Analysen von mehr als einem Messwert, insbesondere kombinierte Messwertanalysen, vornehmen.

Die Trennbox umfasst in einer Ausgestaltung eine Überwachung. Die Überwachung ist dafür da, vorzugsweise Komponenten, Bauteile, den Traktionsakkumulator und/oder Steuereinheiten anhand von Messwerten in der Trennbox auf Funktionstüchtigkeit zu überwachen.

Die Trennbox kann mit Sicherungen ausgestattet sein. Zu der Gruppe Sicherungen gehören Sicherungen wie Pyro-Fuses, Schmelzsicherungen, Überstromschütze oder Keramiksicherungen. Jedes dieser Bauteile kann in einer Hochvoltleitung eingepasst sein.

Die Sicherheitsvorrichtung hat in einer günstigen Ausgestaltung eine Trennbox, die zwei, vorzugsweise galvanisch voneinander getrennte, Spannungsbereiche aufweist. Die Spannungsbereiche unterscheiden sich in Bezug auf ihre absoluten Spannungen. Ein Bereich kann ein Niedervoltbereich sein. Ein Bereich kann ein Hochvoltbereich sein.

Die Sicherheitsvorrichtung folgt einem modularen Konzept. Die Sicherheitsvorrichtung kann mehr als eine Trennbox aufweisen. Auch kann die Sicherheitsvorrichtung für Antriebsstränge mit mehr als einem Traktionsakkumulator gestaltet sein.

Nachdem es Ladestationen unterschiedlicher Spannungsniveaus gibt, erweitert die Trennbox ihren Einsatzbereich, wenn sie eine Spannungswechselvorrichtung aufweist. Die Spannungswechselvorrichtung kann für unterschiedliche Ausgangsspannungen gestaltet sein.

Die zuvor dargestellten Kombinationen und Ausführungsbeispiele lassen sich auch in zahlreichen weiteren Verbindungen und Kombinationen betrachten.

Aus Sicherheitserwägungen gibt es also in dem zuvor behandelten Antriebsstrang eine Trennbox (auch BDU ("Battery Disconnect Unit") genannt); die Trennbox ist für den Einsatz in einem elektrisch angetriebenen Kraftfahrzeug vorgesehen (sie ist beschleunigungsfest, erschütterungsfest, temperaturstabil, spritzwassergeschützt, mechanisch beeinflussungsfest, impulssicher usw.). Die Trennbox ist sehr einfach gehalten; sie kann so aufgebaut sein, dass sie ausschließlich sehr langsame (weniger als 1 MHz getaktete) Prozessoren in ihrer Steuereinheit besitzt.

Wegen der einfachen Messprogrammgestaltung sind die Abarbeitungsschritte der Trennbox sehr schnell. Die Trennbox ist eine sehr schnell arbeitende Trennbox; unabhängig von dem Fehlerfall kann die Trennbox innerhalb von maximal 5 ms eine sichere Trennung der Hochvoltleitungen durchführen - die abgangsseitigen Hochvoltleitungen werden in einem Zeitraum von weniger als 5 ms spannungsfrei geschaltet (wenn ein sicherheitskritischer Zustand anhand von Messwerten festgestellt worden ist). Die Trennbox übernimmt aber trotzdem ihre Funktionen der Messwerterfassung und des sofortigen Reagierens auf einen oder auf mehrere Fehlwerte zwischen den gemessenen (Mess-)Werten.

Anhand der Beschreibung der Sicherheitsvorrichtung ist gezeigt worden, wie einzelne Komponenten eines Antriebstrangs eines elektrisch angetriebenen Kraftfahrzeugs zur Schaffung einer über mehrere Steuereinheiten verteilten Sicherheitsvorrichtung aufeinander abgestimmt werden können. Jede Komponente (z. B. eine erste Steuereinheit, z. B. eine zweite Steuereinheit) kann mit ihren proprietären Anschlüssen, Schnittstellen und Software-Modulen arbeiten. Allen Komponenten werden die Messwerte, über die die Trennbox (bzw. ihre Steuereinheit) verfügt, zur Verfügung gestellt. Hierfür kann der Niedervoltkommunikationsbus genutzt werden.

Auf diese Weise ist eine zuverlässige BDU (bzw. Trennbox) geschaffen, die, eingebunden in eine Steuergeräteschar, es den übrigen Steuergeräten (bzw. Steuereinheiten) erlaubt, ihre proprietären Funktionen vollumfassend wahrzunehmen, aber trotzdem zahlreiche Risiken und Gefahren, insbesondere für Passagiere, Fahrer und Mechaniker des Kraftfahrzeugs, abfängt.

Die zuvor dargestellten besonderen technischen Aspekte und die daraus resultierenden Vorteile lassen sich auch unter den folgenden Aspekten betrachten bzw. sie können wie folgt zusammengefasst werden.

Die BDU (bzw. die Trennbox) kann Teil des Traktionsakkumulators sein, der sich aus mehreren Teil-Traktionsakkumulatoren zusammensetzen kann. Die BDU ist sozusagen die erste Steuereinheit. Die BDU kann in dem Traktionsakkumulatorgehäuse integriert sein. Der erste Traktionsakkumulator umfasst die erste Steuereinheit, die aber, insbesondere im Vergleich mit der VCU (zentrales Steuergerät), als "abgespeckt" bezeichnet werden kann. Die BDU kann integraler Bestandteil des Traktionsakkumulators sein, sodass die nach außen führenden Pinne, Kontakte und Anschlüsse über die BDU geführt sind. Interne Pole des Traktionsakkumulators sind von außen nicht zugänglich. Das Gerät bzw. die Komponente, über die elektrische Energie zu beziehen ist, ist die in den Traktionsakkumulator integrierte BDU.

Eine BDU mit einer ersten Steuereinheit kann das zentrale Energieversorgungsgerät zur Durchleitung eines elektrischen Stroms und für eine Zurverfügungstellung einer elektrischen Spannung sein, an das mehrere Traktionsakkumulatoren, insbesondere baugleiche Traktionsakkumulatoren, angeschlossen sein können.

Die BDU führt erste Auswertungen aus, jedoch die komplexeren, mehr Rechenzeit bzw. mehr Rechenschritte und Rechentakte umfassenden Auswertungen finden in einem anderen Steuergerät bzw. einer anderen Steuereinheit des Antriebsstrangs statt, z. B. in der VCU.

Ist die BDU (bzw. die Trennbox) nicht nur derart gestaltet, dass sie Energie von dem Traktionsakkumulator (oder von den (mehreren) Traktionsakkumulatoren) zu dem oder den Verbrauchern, wie einem (Antriebs-)Motor, weiterleiten kann, sondern auch den Traktionsakkumulator (oder die Traktionsakkumulatoren) laden kann, so ist vorteilhafterweise eine Lade- und Umschalteinrichtung, z. B. als eine zweite Platine (bzw. als eine zweite Baugruppe), in der BDU eingebaut, die vorteilhafterweise eine Spannungswechselvorrichtung ist. In einem solchen Fall ist vorteilhafterweise der Traktionsakkumulator in Teilakkumulatoren oder in einen ersten und in einen zweiten Traktionsakkumulator unterteilbar. Aus Vereinfachungsgründen kann dann auch davon gesprochen werden, dass es einen ersten und einen zweiten Traktionsakkumulator gibt.

Mit so einer Trennbox ist es möglich, ein deutlich reduziertes elektronisches Steuerungssystem mit kompakten, in ihrer Rechenleistung begrenzten Steuereinheiten in einem Fahrzeug zu realisieren.

Je nach Ausgestaltung kann ein Batterie-Management-System weggelassen werden.

Je nach Ausgestaltung kann eine komplexere Recheneinheit am Traktionsakkumulator (bzw. an dem Array aus Traktionsakkumulatoren) eingespart werden.

Dem zentralen Fahrzeugsteuergerät (auch "VCU" genannt) kann die Steuerungsstrategie überlassen werden.

Die Trennbox übernimmt (schwerpunktmäßig) Sicherheitsfunktionen; geeignete Regelungs-Strategien, state-of-health-Strategien und WLPT-Strategien können anderen Steuereinheiten, z. B. einer zweiten Steuereinheit, die z. B. das zentrale Fahrzeugsteuergerät ist, überlassen werden.

Die Trennbox liefert Messwerte des Traktionsakkumulators und der zur Verfügung stehenden (elektrischen) Ströme und der zur Verfügung stehenden (elektrischen) Spannungen.

Die Trennbox kann mit den Adverbien "selbsthandelnd", "eigensicher", "alleinstehend" und "allein agierend" bezeichnet werden.

Die Trennbox ist in der Lage, von sich aus eine Trennung der elektrischen Energieversorgung von dem restlichen Fahrzeug vorzunehmen.

Fließen die elektrischen Ladeströme auch über die Trennbox, so kann die Trennbox zudem für eine Abkoppelung von Ladeströmen sorgen, z. B. wenn ein Ladestecker in einer Ladesäule eingesteckt ist.

Die Trennbox ist eine sichere Einheit. Sie selbst sorgt für Sicherheit. Die Trennbox ist eigensicher.

Die Trennbox kann alleinstehend handeln und agieren. Bricht der Kommunikationsbus zusammen, z. B. wegen eines technischen Busfehlers, so sorgt die Trennbox für ein Abschalten der Energieversorgung.

Die Trennbox ist allein agierend. Sie allein bestimmt, ob ein elektrischer Strom von einem Traktionsakkumulator an Verbraucher, wie an einen (Antriebs-)Motor, fließen kann.

Ein Energieversorgungssystem, das in einem Kraftfahrzeug eingebaut ist, hat wenigstens einen ersten Traktionsakkumulator und wenigstens einen zweiten Traktionsakkumulator, sofern die BDU (bzw. die Trennbox) dafür ausgelegt ist, sowohl an einem niedrigeren Spannungsversorgungssystem zur Aufladung des Traktionsakkumulators (bzw. der Traktionsakkumulatoren) angeschlossen zu werden als auch an einer hierzu im Vergleich höheren Spannungsversorgung. Außerdem gibt es leistungsschaltende Elemente, z. B. IGBTs, MOS-Fets, Schütze und/oder Relais.

In einem ersten Schaltzustand (des Aufladebetriebs) werden durch die leistungsschaltenden Elemente, die z. B. Schalter für elektrische Leistungsschaltungen sein können, der erste Traktionsakkumulator und der zweite Traktionsakkumulator in eine Parallelverschaltung gebracht.

In einem zweiten Schaltzustand (des Aufladebetriebs) werden mithilfe der leistungsschaltenden Elemente der erste Traktionsakkumulator und der zweite Traktionsakkumulator in eine Reihenschaltung gebracht.

Am negativen Pol des ersten Traktionsakkumulators sind zwei leistungsschaltende Elemente vorhanden, die entweder direkt oder auch indirekt, z. B. als Serienverschaltung, dort angeschlossen sind.

Dieses Umschalten bzw. diese Option des Umschaltens kann vorteilhafter Weise weitergebildet werden, die für sich gesehen, sowohl einzeln als auch in Kombination, ebenfalls erfinderische Aspekte offenbaren können.

In einer vorteilhaften Weiterbildung sind an einem negativen Pol des zweiten Traktionsakkumulators zwei leistungsschaltende Elemente angebracht.

Diese zweiten leistungsschaltenden Elemente stehen derart mit dem zweiten Traktionsakkumulator in Verbindung, dass sie mit dem zweiten Traktionsakkumulator eine Sternschaltung mit einem Sternpunkt als Knoten bilden. Der Sternpunkt befindet sich zwischen dem negativen Pol des zweiten Traktionsakkumulators und jeweils einer Schalter-Hoch-Seite von ihnen (von den beiden leistungsschaltenden Elementen).

Das zuvor vorgestellte Energieversorgungssystem kann vorteilhafterweise dadurch weitergebildet werden, dass es mehrere erste Traktionsakkumulatoren gibt. Entsprechend der Anzahl mehrerer erster Traktionsakkumulatoren gibt es dann auch mehrere zweite Traktionsakkumulatoren. Das Energieversorgungssystem besitzt mehrere erste Traktionsakkumulatoren und mehrere zweite Traktionsakkumulatoren.

Jeweils ein erster Traktionsakkumulator und jeweils ein zweiter Traktionsakkumulator können als Schaltungspaare betrachtet werden. In Bezug auf ihr Arrangement zueinander kann ein solches Schaltungspaar in eine Parallelanordnung in einem der ersten Schaltzustände gebracht werden. In Bezug auf ihr Arrangement zueinander können die beiden Traktionsakkumulatoren, die ein Pärchen bilden, in eine Serienanordnung gebracht werden.

Das Energieversorgungssystem hat mehrere Kontakte. An einem Kontakt des Energieversorgungssystems kann eine erste Spannung angeschlossen werden. An einem zweiten Kontakt des Energieversorgungssystems kann eine zweite Spannung angeschlossen werden.

Idealerweise beträgt die erste Spannung nur etwa zwischen 40 % und 60 % der zweiten Spannung.

Das Energieversorgungssystem ist für wenigstens zwei sehr unterschiedliche Spannungsniveaus konzipiert. Das Energieversorgungssystem kann so gestaltet sein, dass es für ein Spannungsniveau von 400 Volt und für ein Spannungsniveau von 800 Volt ausgelegt ist. In einer alternativen Ausgestaltung kann das Spannungsniveau auch so gewählt werden und das Energieversorgungssystem so ausgelegt sein, dass es zwischen einem Spannungsniveau von 800 Volt und einem Spannungsniveau von 1600 Volt wechseln kann.

Das Energieversorgungssystem besitzt vorteilhafterweise an wenigstens einem, wenn nicht sogar an allen seinen positiven Polen, also an den positiven Polen des ersten Traktionsakkumulators und/oder des zweiten Traktionsakkumulators, ein Überstromschutz.

Das Energieversorgungssystem hat, wie gesagt auch negative Pole. An dem negativen Pol des ersten Traktionsakkumulators und/oder an dem negativen Pol des zweiten Traktionsakkumulators ist vorteilhafterweise ein Stromsensor angeschlossen.

Die Trennbox kann in zwei verschiedene Energieflusszustände geschaltet werden. In einem Energieflusszustand fließt Energie in den elektrischen Speicher, der durch einen oder mehrere Traktionsakkumulatoren gebildet sein kann. In einem zweiten Energieflusszustand fließt Energie von dem einen oder den mehreren Traktionsakkumulatoren (dem elektrischen Speicher) zu dem einen oder den mehreren Motoren.

Dank der Schnelltrennung und den schnelltrennenden Bauteilen (bzw. den leistungsschaltenden Elementen) ist es möglich, den Energiefluss zu und von dem Traktionsakkumulator (bzw. dem Array aus mehreren Traktionsakkumulatoren) sicher abzuklemmen. Das Fahrzeug ist in großen Teilen hochspannungsfrei.

### Figurenkurzbeschreibung

Die vorliegende Erfindung kann noch besser verstanden werden, wenn Bezug auf die beiliegenden Figuren genommen wird, die beispielhaft besonders vorteilhafte Ausgestaltungsmöglichkeiten darlegen, ohne die vorliegende Erfindung auf diese einzuschränken, wobei
Figur 1 in schematischer Darstellung ein Fahrzeug mit einer Sicherheitsvorrichtung zeigt,
Figur 2 in einer schematischen Blockdarstellung eine Variante des ein Akkumulatorsystem umfassenden Teils einer Sicherheitsvorrichtung zeigt, die als Alternative für das Akkumulatorsystem nach Figur 1 in ein Fahrzeug gem. Figur 1 eingebaut werden kann,
Figur 3 in einer schematischen Darstellung eine dritte Ausführungsvariante einer Sicherheitsvorrichtung zeigt,
Figur 4 eine Sicherheitsvorrichtung mit einer spannungsadaptierbaren Trennbox als vierte Variante zeigt,
Figur 5 eine Sicherheitsvorrichtung für einen Mega-Watt-Antriebsstrang (LKW-Antriebsstrang) zeigt,
Figur 6 eine erste Ausführungsform eines Energieversorgungssystems mit dazugehöriger Schaltvorrichtung für ein Kraftfahrzeug zeigt,
Figur 7 eine zweite Ausführungsform eines Energieversorgungssystems mit dazugehöriger Schaltvorrichtung für ein Kraftfahrzeug zeigt,
Figur 8 eine dritte Ausführungsform eines Energieversorgungssystems mit dazugehöriger Schaltvorrichtung für ein Kraftfahrzeug zeigt und
Figur 9 einen alternativen Ausschnitt aus einer Energieversorgungseinrichtung für ein Kraftfahrzeug zeigt.

### Figurenbeschreibung

Figur 1 demonstriert anhand eines als Schemazeichnung dargestellten Fahrzeugs 3 die komponentenmäßige Zusammensetzung der Sicherheitsvorrichtung 1 gemäß einer ersten möglichen Ausgestaltung.

Das Fahrzeug 3 wird von einem Antriebsstrang 5 angetrieben. Das Fahrzeug 3 hat mehrere Räder 7, 9. Wenigstens ein Rad 9 des Fahrzeugs 3 wird, wenn das Fahrzeug 3 bewegt werden soll, durch den Motor 11 angetrieben. Der Motor 11 treibt die Achse 13 normalerweise in einer Geradeausfahrt an. Für die Achse 13 werden dann die Räder, wie das Hinterrad 9, von dem Antriebsstrang 5 angetrieben. Der Antriebsstrang 5 ist ein Hinterachsantrieb. Die elektrische Leistung für den Motor 11, der ein Elektromotor ist, wird über das Energieversorgungskabel 39 aus dem Akkumulatorsystem 23 zur Verfügung gestellt, sofern die Trennbox 25 in einem die Hochvoltleitungen 39^{I}, 39^{II} durchschaltenden Zustand geschaltet ist. Ist die Trennbox 25 in dem durchgeschalteten Zustand, ist über das Energieversorgungskabel 39 die elektrische Spannung des Traktionsakkumulators 21 im Fahrzeug 3 verteilbar.

Die Trennbox 25 kann den Traktionsakkumulator 21 von dem Energieversorgungskabel 39 durch Schalten von Trennelementen 41, 41^{I} (siehe Figur 2) abtrennen.

Wird die Trennbox 25 an dem Traktionsakkumulator 21 angeschlossen, bildet sich das Akkumulatorsystem 23, bei dem die Pole 43, 45 des Traktionsakkumulators 21 nicht mehr von außen berührbar sind. Die Pole 43, 45 sind durch die Trennbox 25 verdeckt und dadurch gegen eine unmittelbare Berührung abgeschirmt.

Die Trennbox 25 ist mit einer Steuereinheit 27 ausgestattet, zu der auch eine Recheneinheit 29 gehört. Messwerte, die die Steuereinheit 27 ermittelt hat, und Daten, die die Steuereinheit 27, berechnet, verarbeitet oder erarbeitet hat, werden über den Kommunikationsbus 33 an eine zweite Steuereinheit 31, die entfernt von der ersten Steuereinheit 27 in dem Fahrzeug 3 angeordnet ist, übertragen. Für die Verbindung über den Kommunikationsbus 33 bietet die erste Steuereinheit 27 einen Kommunikationsbusanschluss 35. Für den Kommunikationsbus 33 bietet die zweite Steuereinheit 31 einen Kommunikationsbusanschluss 37. Der Kommunikationsbus 33 verläuft durch das Fahrzeug 3, sodass weitere Teile des Kommunikationsbus 33^{I} bis zu den elektrischen Geräten des Antriebsstrangs 5, wie zum Beispiel bis zu dem Wechselrichter 15 mit seinem Zwischenkreis und seinem Zwischenkreiskondensator, reichen. Über den Kommunikationsbusanschluss 35, 37 ist die jeweilige Steuereinheit 31, 27 (genauer ihre Recheneinheit 29) mit dem Kommunikationsbus 33 verbunden.

Die zweite Steuereinheit 31 hat mit der Datenermittlung durch Messvorgänge (an und um den Traktionsakkumulator 21 bzw. 21^{I} (vgl. Figur 2)) nichts mehr zu tun. Die Messvorgänge finden in der ersten Steuereinheit 27 statt. Auch die physische Betätigung der Trennelemente 41, 41^{I} (vgl. Figur 2) findet ausschließlich in der ersten Steuereinheit 27 statt. Die zweite Steuereinheit 31 ist in Bezug auf Ansteuerschaltungen für die Trennelemente 41, 41^{I} (vgl. Figur 2) ohne jegliche Schaltausgänge ausgeführt.

Figur 2 zeigt anhand einer schematischen Zusammenstellung ein Akkumlatorsystem 23^{I}, das in einem Fahrzeug 3 (s. Figur 1) verbaut werden kann, weil die Energieversorgungskabel 39^{III}, 39^{IV} aufgrund der Trennelemente 41, 41^{I} spannungsfrei durch die erste Steuereinheit 27 bzw. durch die Trennbox 25 geschaltet werden können. Das Akkumulatorsystem 23^{I} ähnelt in weiten Teilen dem Akkumulatorsystem 23 gem. Figur 1. In Bezug auf seine Pole 43^{I}, 45^{I} ist der in Figur 2 dargestellte Traktionsakkumulator 21^{I} aber andersartig realisiert als der in Figur 1 gezeigte Traktionsakkumulator 21. Die Pole 43, 45 des in Figur 1 gezeigten Traktionsakkumulator 21 weichen zu den Polen 43^{I}, 45^{I} des in Figur 2 gezeigten Traktionsakkumulators 21^{I} bezüglich ihrer Lage, ihrer Positionierungen und ihrer Dimensionen ab.

Die Pole 43^{I}, 45^{I} des Traktionsakkumulators 21^{I} befinden sich an gegenüberliegenden Seiten des Traktionsakkumulators 21'. Durch Hinzunahme der Trennbox 25 wird der Zugang zu den Polen 43^{I}, 45^{I} von einer Seite verhindert. Nur noch die weiterführenden Hochvoltleitungen 39^{III}, 39^{IV} können außerhalb des Akkumulatorsystems 23^{I} berührt werden. Die weiterführenden, sozusagen zweiten Hochvoltleitungen 39^{III}, 39^{IV} können, wie zuvor schon angesprochen, selektiv spannungsfrei geschaltet werden. Hierfür sind die beiden Trennelemente 41, 41^{I} in der Trennbox 25 vorhanden, die sowohl die positive wie auch die negative Spannungsseite der Gleichspannung abkoppeln können.

Der in Figur 2 gezeigte Traktionsakkumulator 21^{I} ist an seinen Polen 43^{I}, 45^{I} über erste Hochvoltleitungen 39', 39^{II} mit der Trennbox 25 verbunden, um so das Akkumulatorsystem 23^{I} zu bilden. Sind die Trennelemente 41, 41^{I} in einer geöffneten Stellung, so kann die elektrische Spannung auf den Hochvoltleitungen 39', 39^{II} nicht auf die abgangsseitigen (den sozusagen zweiten) Hochvoltleitungen 39^{III}, 39^{IV} weitergeleitet werden. Die abgangsseitigen Hochvoltleitungen 39^{III}, 39^{IV} sind - in diesem Schaltzustand - spannungsfrei; sie sind berührungssicher.

An der Hochvolt-Spannungs-und-Mess-Einheit 47 sind die Messkabel zu den Hochvoltmessungen angeschlossen. Die Messsignale, die durch die Hochvolt-Spannungs-und-Mess-Einheit 47 gemessen werden, werden über eine galvanische Trennung an die erste Steuereinheit 27 weitergeleitet, wo sie in Messdaten umgewandelt werden, um am Kommunikationsbusanschluss 35 zur Verfügung zu stehen.

Die erste Steuereinheit 27 kann die Trennelemente, wie die in der Hochvoltleitungen 39', 39^{III} bzw. 39", 39^{IV} sitzenden Trennelemente 41, 41^{I}, schalten.

Zur Schaffung der Entscheidung, ob ein Trennelement 41, 41^{I} geschaltet werden soll, führt zum einen die Recheneinheit 29 mehr als eine Berechnung durch. Zum anderen kann die Steuereinheit 27 einen Befehl über den Kommunikationsbus 33 erhalten, der die Steuereinheit 27 veranlasst, wenigstens eines der Trennelemente 41, 41^{I} zu schalten.

Für das Schalten der Trennelemente 41, 41^{I} besitzt die Steuereinheit 27 Schalter-Treiber 57, 57', 57". Ein Schalter-Treiber 57^{II} ist für das Schalten des Vorlade-Schalters 55, der Teil der Vorlade-Einheit 51 ist, zuständig. Die anderen Schalter-Treiber 57, 57^{I} sind für das Schalten der Trennelemente 41, 41^{I} zuständig.

Als eine weitere Maßnahme der strommäßigen Begrenzung und damit zur Sicherung gegen Überströme bzw. zu hohe elektrische Ströme (Kurzschlussströme) hat die Trennbox 25 Sicherungen 71, 71^{I}, von denen beispielsweise eine eine Schmelzsicherung ist und die andere eine Halbleitersicherung ist.

Zur Berechnung und für den Datenaustausch im Zusammenhang mit berechneten und ermittelten Messwerten sowie der Auswertung der Messwerte in Daten und Datenpaketen verfügt die Recheneinheit 29 über wenigstens drei Rechenmodule 61, 65, 67 und über ein Kommunikationsmodul 63. In dem Modul Fehleranalyse-Modul 61 wird u. a. berechnet, ob die Messwerte bzw. die Messsignale in validen Wertebereichen liegen. In dem Modul Trennbox-Analyse-Modul 65 wird die Trennbox 25 auf Funktionstüchtigkeit überwacht, z. B. ob die Trennelemente 41, 41^{I} zuverlässig schalten, insbesondere auch zuverlässig trennen können. In dem Modul Widerstands-und-Isolations-Mess-Modul 67 werden die Widerstandswerte und die Isolationswerte der Trennbox 25 überwacht. Darüber hinaus besitzt die Trennbox 25 die Hochvolt-Spannungs-und-Mess-Einheit 47, die Spannungswerte und elektrische Spannungen über Messleitungen 49, 49', 49", 49^{III}, 49^{IV}, 49^{V}, 49^{VI} aufnehmen kann. Der Traktionsakkumulator 21^{I} ist ein Hochvolttraktionsakkumulator. Folglich können auf den Messleitungen 49, 49', 49^{II}, 49^{III}, 49^{IV}, 49^{V}, 49^{VI} Spannungen von bis zu 800 Volt anliegen. Die Spannungen werden gemessen und überwacht. Außerdem überwacht die Trennbox 25 mithilfe des Trennbox-Analyse-Moduls 65, ob die Trennbox 25 zu jedem beliebigen Zeitpunkt einwandfrei funktioniert. D. h., die Trennbox 25 kann sich selbst überwachen, indem sie auf Bauteilebene Überwachungen durchführt. Auch überwacht die Trennbox 25 den Traktionsakkumulator 21^{I}. So ist eine Funktionstüchtigkeitsüberwachung des Akkumulatorsystems 23^{I} sichergestellt.

Durch die Hochvolt-Spannungs-und-Mess-Einheit 47 und durch die gesondert ausgeführte Recheneinheit 29 in der Trennbox 25 sind zwei Spannungsbereiche geschaffen. Somit kann der Kommunikationsbus 33 als Niedervolt-Kommunikationsbus ausgelegt sein. Die weiteren Geräte an dem Kommunikationsbus, wie z. B. die zweite Steuereinheit 31 (vgl. Figur 1), können als Niedervoltsteuergeräte gestaltet sein. Die Hochspannung von den Hochvoltleitungen 39^{III}, 39^{IV} wird zuverlässig von dem Niedervoltbereich und den dort vorhandenen elektrischen Messgeräten und den elektrischen Steuergeräten des Fahrzeugs (z. B. Fahrzeug 3 gem. Figur 1) ferngehalten.

Die von der Recheneinheit 29 behandelten Messwerte und Auswerteergebnisse können über den Kommunikationsbusanschluss 35 auf dem Kommunikationsbus 33 übertragen werden. Soll eine externe Auswertelogik 32, die z. B. in einer zweiten Steuereinheit 31 (vgl. Figur 1) sitzt, komplexere Analysen durchführen und das Ergebnis in Form zum Beispiel eines Schaltbefehls an die Trennelemente 41, 41^{I} übertragen, so können auch Daten, Befehle und Datensätze über den Kommunikationsbus 33 übertragen werden und an dem Kommunikationsbusanschluss 35 empfangen werden. Die Recheneinheit 29 ist so programmiert,
- dass bei Erhalt eines fehlerhaften externen Befehls von der zweiten Steuereinheit 31,
- dass bei einem fehlerhaften Messwert,
- dass bei einem außerhalb von Toleranzgrenzen angesiedelten Messwert und
- dass bei einem nicht vorhandenen Messwert, obwohl der Messwert bekannt sein müsste,
ein Öffnen wenigstens eines der Trennelemente 41, 41^{I} sichergestellt wird. In solchen Fällen wird innerhalb von nur 5 ms die Trennung mithilfe der Trennelemente 41, 41^{I} vorgenommen. Alle diese Vorgänge und Überprüfungen gehören zu den Validierungen des Traktionsakkumulators 21'. Die besonders schnell durchzuführenden Validierungen (in Abarbeitungszeiten von weniger als 100 Takten) finden in der ersten Steuereinheit 27 statt.

Die Vorlade-Einheit 51 umfasst einen Vorlade-Schalter 55 und einen Vorlade-Widerstand 53. Mithilfe der Vorlade-Einheit 51 kann ein Zwischenkreiskondensator (siehe den Wechselrichter 15 in Figur 1) über eine Aufladezeit verzögert, d. h. mit einem kontrolliert niedrigeren Strom, aufgeladen werden (z. B. über eine Zeitbasis von 5 tau, z. B. innerhalb von weniger als 100 ms).

Sollte ein Fall für die Recheneinheit 29 vorliegen, dass wenigstens eines der Trennelemente 41, 41^{I} zu schalten ist, werden die Schalter-Treiber 57, 57^{I} durch die Schaltersteuerung 69 angesteuert.

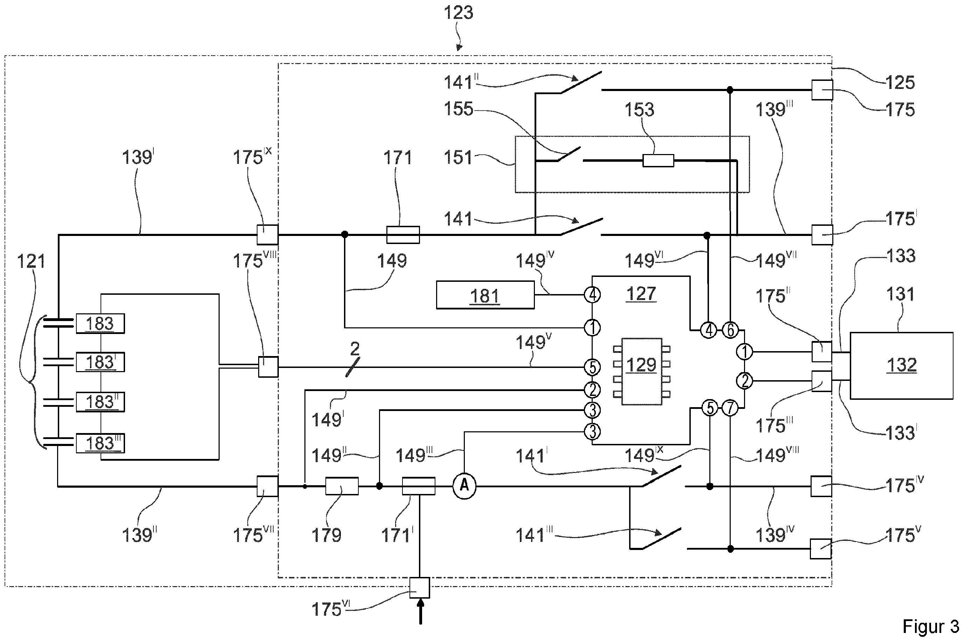

Figur 3 zeigt eine weitere Ausgestaltungsvariante eines Akkumulatorsystems 123 mit einer Trennbox 125 und einem Traktionsakkumulator 121.

In Figur 3 ist der Traktionsakkumulator 121 durch vier in Reihe verschaltete Zellen symbolisch dargestellt. Es ist die Trennbox 125 zu sehen, zu der anhand einer bedruckten Leiterplatte (bzw. ihrer Umrisse) die erste Steuereinheit 127 mit der Recheneinheit 129 gehört. An dem Kommunikationsbus 133, 133^{I}, genauer an den Kontakten 175^{II}, 175^{III} des Kommunikationsbusses 133, 133^{I} ist die zweite Steuereinheit 131 angeschlossen. Die zweite Steuereinheit 131 ist für die komplexeren Auswertealgorithmen zuständig und verantwortlich. Dort sitzt vorteilhafterweise die eigentliche Auswertelogik 132. Die Recheneinheit 129 konzentriert sich auf Plausibilitätsüberwachungen der über die Messleitungen (bzw. für Messdaten bestimmte Datenleitungen) 149, 149^{I}, 149^{II}, 149^{III}, 149^{IV}, 149^{V}, 149^{VI}, 149^{VII}, 149^{VIII}, 149^{IX} übertragenen Messwerte, wie Spannungswerte auf den Hochvoltleitungen 139^{I}, 139^{II}, 139^{III}, 139^{IV}, wie Spannungen unmittelbar am Traktionsakkumulator 121, wie elektrische Stromwerte auf den Hochvoltleitungen 139^{I}, 139", 139^{III}, 139^{IV} und wie eine Überwachung auf Schaltvorgänge an dem Vorlade-Schalter 155.

Sowohl in Richtung auf den Traktionsakkumulator 121 hin als auch nach außen hin, z. B. gegenüber der zweiten Steuereinheit 131, bietet die Trennbox 125 eine überschaubare Anzahl Kontakte, genauer weniger als zehn Kontakte, um noch exakter zu sein, genau neun Kontakte 175, 175', 175^{II}, 175^{III}, 175^{IV}, 175^{V}, 175^{VI}, 175^{VII}, 175^{III}, 175^{IX}. Bei der geringen Anzahl der Kontakte 175^{I}, 175^{II}, 175^{III}, 175^{IV}, 175^{V}, 175^{VI}, 175^{VII}, 175^{III}, 175^{IX} (bzw. Pinne) ist die Gefährdung durch Spannungsschlag reduziert.

Mithilfe der Messleitungen 149', 149" kann die Spannung, die an dem Shunt 179 abfällt durch die erste Steuereinheit 127 gemessen werden. Der Shunt 179 sitzt in der Hochvoltleitung 139^{III}, die für das negative Potential am negativen Pol des Traktionsakkumulators 121 mit seinen in Serie verschalteten Zellen zur Erzeugung der Hochspannung (im Bereich von 400 Volt) angeschlossen ist. Über die weitere Messleitung 149^{III} kann die Steuereinheit 127 den in der Hochvoltleitung 139^{II} fließenden elektrischen Strom durch das integrierte Strommessgerät unmittelbar messen. Aufgrund der doppelten Messung der ersten Steuereinheit 127 des elektrischen Stroms in der Hochvoltleitung 139^{II} kann die erste Steuereinheit 127, genauer ihre Recheneinheit 129 Plausibilitätsprüfungen und Querkontrollen durchführen. Ist irgendeine der Plausibilitätsprüfungen, wie z. B. die Stromflussprüfung, in der ersten Steuereinheit 127 außerhalb eines validen Toleranzbandes, unterbricht die erste Steuereinheit 127 die den Stromfluss durch Betätigung der Trennelemente 141, 141^{I}.

Durch den Vorlade-Schalter 155, der Teil der Vorlade-Einheit 151 ist, kann zum Start des Betriebs des Fahrzeugs eine kontrollierte Aufladung von Kapazitäten im Antriebsstrang, wie z. B. dem Antriebsstrang 5 des Fahrzeugs 3 (siehe Figur 1) durchgeführt werden. Die Hochvoltleitungen 139^{I}, 139" fächern sich hinter den Sicherungen 171, 171^{I} in mehrere Hochvoltleitungen 139^{III}, 139^{IV} auf. Einige der Hochvoltleitungen 139^{III}, 139^{IV} lassen nur einen reduzierten Lade- bzw. Anfangsstrom fließen, z. B. aufgrund des Vorlade-Widerstands 153. Die erste Steuereinheit 127 kann auch solche Stromflüsse über ihre Messleitungen 149^{I}, 149^{II}, 149^{III} und den Messsensoren 179 sowie Strommessgerät "Hall-Effekt-Sensor" delektieren und auswerten. Nur wenn der Ladevorgang zuverlässig, schlüssig und in einer ausreichend kurz bemessenen Zeit (z. B. innerhalb von Zeiten von 5 Tau bis 10 Tau) abwickelbar war, wird der Schaltvorgang für das Durchschalten wie folgt abgewickelt.

Soll der Antriebsstrang (siehe Antriebsstrang 5 gem. Figur 1) in Betrieb genommen werden, so wird zuerst das Trennelement 141^{I} geschlossen. Anschließend wird der Vorlade-Schalter 155 geschlossen. In einem daran sich anschließenden Schritt wird die Zeit (z. B. 3 Tau oder 5 Tau oder 10 Tau) abgewartet und die Spannungsüberwachung kontrolliert. Ergibt sich die richtige Spannung, wird anschließend das Trennelement 141 geschlossen, um daraufhin den Vorlade-Schalter 155 zu öffnen.

Stellt jedoch die erste Steuereinheit 127 fest, dass eine Grenzwertüberprüfung oder eine Plausibilitätsüberprüfung ein fehlerhaftes Messergebnis oder einen Fehlerzustand geliefert hat, meldet die erste Steuereinheit über den Kommunikationsbus 133, 133^{I} an die zweite Steuereinheit 131 den erkannten Fehler weiter. Ist die zweite Steuereinheit 131 eines der zentralen Fahrzeugsteuergeräte, so ist dem gesamten Fahrzeug bekannt, dass es einen Fehlerfall entweder im Akkumulatorsystem 123 oder sogar dem Antriebsstrang 5 (siehe Figur 1) gegeben hat.

Über den Kontakt 175^{VI}, der zu der Sicherung 171^{I} führt, kann, weil es sich bei der Sicherung 171^{I} um ein Pyro-Fuse handelt, die Sicherungen extern ausgelöst werden, z. B. über eine Airbag-Zündung. Auf diese Weise ist sichergestellt, dass bei schwereren Fällen, die zu Zündungen eines oder mehrerer Airbags geführt haben, die Trennbox 125 die Hochvoltleitungen 139^{III}, 139^{IV} augenblicklich (in einem Zeitintervall von weniger als 5 Millisekunden) spannungsfrei durch Betätigung der Trennelemente 141, 141^{I} oder ersatzweise durch Ansprechen der Pyro-Fuse 171^{I} geschaltet hat.

Das Traktionsakkumulatorsystem 123 besitzt eine Platine für ein Zell-Monitoring durch die Zell-Überwachungen 183, 183^{I}, 183^{II}, 183^{III}. Das Zell-Monitoring kann einzelne Zellen, tatsächlich alle Zellen, des Traktionsakkumulators 121 messtechnisch überwachen. Hierfür führt das Zell-Monitoring Spannungsmessungen durch. Zusätzlich kann das Zell-Monitoring Temperaturmessungen an einzelnen Zellen durchführen. Die Messergebnisse werden über Messleitung 149^{V} (bzw. Datenleitungen zur Messdatenübertragung) der Recheneinheit 129 zur Verfügung gestellt. Der Kontakt 175^{VIII} ist ein Mehr-Pin-Kontakt, sodass Spannungswerte und Temperaturwerte vom Zell-Monitoring zur Recheneinheit 129 übertragen werden können.

Eine weitere Überwachungsfunktion kann durch die Trennelemente-Diagnose 181 durchgeführt werden, die misst, ob die Trennelemente 141, 141^{I}, wie berechnet, entweder im geschalteten oder im getrennten Schaltzustand sich befinden. Es wird also geprüft, ob die Trennelemente 141, 141^{I} den Schaltzustand erreicht haben, den die Recheneinheit 129 zu den einzelnen Trennelementen 141, 141^{I} aufgrund ihrer Berechnungen erwartet. Die Trennelemente-Diagnose 181 ist Teil des in Figur 2 dargestellten Trennbox-Analyse-Moduls 65.

Darüber hinaus bietet die Trennbox 125 zweite Trennelemente 141^{II}, 141^{III}, über die das Akkumulatorsystem 123 in einen Auflade-Zustand versetzt werden kann. Soll der Traktionsakkumulator 121 geladen werden, d. h., soll ein elektrischer Strom zum Aufladen des Traktionsakkumulators 121 in diesen hineinfließen, wird eine gesonderte Ladestrecke durch die Trennelemente 141^{II}, 141^{III} durchgeschaltet, während die Trennelemente 141, 141^{I} und Vorladeschalter 155 im getrennten Schaltzustand sich befinden.

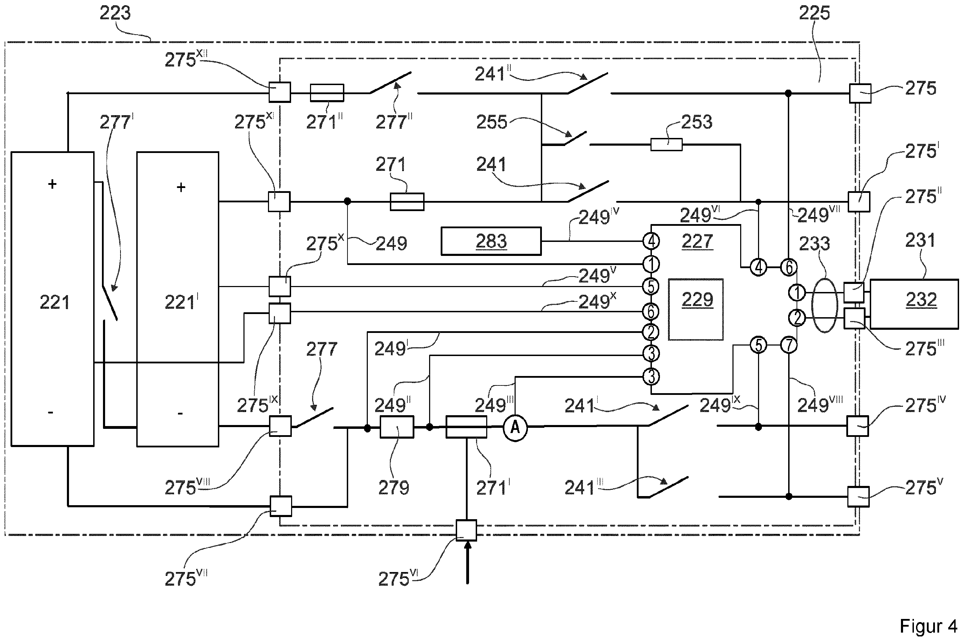

Figur 4 zeigt eine weitere Ausgestaltungsvariante eines Akkumulatorsystems 223 mit einer Trennbox 225 und einem ersten Traktionsakkumulator 221 und einem zweiten Traktionsakkumulator 221^{I}.

Das Akkumulatorsystem 223, das in Figur 4 gezeigt ist, ähnelt in weiten Teilen dem Akkumulatorsystem 123, das aus Figur 3 bekannt ist.

Aufgrund der beiden Traktionsakkumulatoren 221, 221', die jeweils für eine Betriebsspannung von 400 Volt mehr als 80 Lithium-lonen-Zellen besitzen, kann, insbesondere in Abhängigkeit der zur Verfügung stehenden Ladespannung von entweder 400 Volt oder 800 Volt, die Trennbox 225 durch ihre Spannungsniveau-Schalter 277, 277^{I}, 277^{II} zwischen einem Spannungsniveau von 400 Volt und einem Spannungsniveau von 800 Volt durch Parallel- oder Seriell-Schaltung der Traktionsakkumulatoren 221, 221^{I} hin- und herschalten.

Ist der Stromfluss zu groß, spricht wenigstens eine der Sicherungen 271, 271^{II} an und unterbricht den Stromfluss durch Unterbrechung der elektrischen Verbindung in den Hochvoltleitungen.

Die Erläuterungen im Zusammenhang mit Figur 3 können in weiten Teilen auf das Akkumulatorsystem 223, das in Figur 4 gezeigt ist, übertragen werden, wobei Komponenten, Gegenstände und Bauteile sowie funktionale Angaben bezüglich ihrer Bezugszeichen bei ähnlichen Komponenten, Gegenständen und Bauteilen sowie funktionalen Angaben mit um 100 höher nummerierten Bezugszeichen ausgestattet sind.

Die beiden Traktionsakkumulatoren 221, 221^{I} können durch die Trennbox 225 und ihre Spannungsniveau-Schalter 277, 277^{I}, 277^{II} in paralleler Verschaltung sowie in Serienverschaltung gehalten bzw. betrieben werden. Dies ist sowohl bei einem Aufladevorgang über die Kontakte 275, 275^{V} und den geschalteten zweiten Trennelementen 141", 141^{III} als auch bei einem regulären Fahrbetrieb mit geschlossenen Trennelementen 241, 241^{I} möglich. Obwohl für eine Vorladung durch den Vorladewiderstand 253 nach Schließen des Vorlade-Schalters 255 ein größerer Strom durch parallel betriebene Traktionsakkumulatoren 221, 221^{I} nicht nötig ist, kann selbst in einem Vorlade-Zustand (zur Aufladung der Zwischenkreiskondensatoren) ein paralleler Betrieb der Traktionsakkumulatoren 221, 221^{I} durchgeführt werden. Sollen die Traktionsakkumulatoren 221, 221^{I} parallel geschaltet sein, sind die Spannungsniveau-Schalter 277, 277^{II} in einen geschlossenen Zustand zu bringen. Sollen die Traktionsakkumulatoren 221, 221^{I} für eine höhere Spannung in einer seriellen Anordnung verschaltet sein, so ist der Spannungsniveau-Schalter 277^{I} in einen geschlossenen Zustand zu bringen. Aufgrund der Möglichkeit des parallelen Betriebs der Traktionsakkumulatoren 221, 221^{I} ist hinter jedem für den Anschluss der Traktionsakkumulatoren 221, 221^{I} vorgesehenen Kontakt 275^{VII}, 275^{VII}, 275^{XI}, 275^{XII} eine Sicherung 271, 271', 271" als Über-Strom-Schutz vorhanden.

Die Recheneinheit 229 der Steuereinheit 227 hat Messleitungen 249^{V}, 249^{X} an den Platinenkontakten 5, 6, über die Spannungen, Temperaturwerte und ggf. auch Gaswerte der Traktionsakkumulatoren 221, 221^{I} ermittelt werden können.

Die Traktionsakkumulatoren 221, 221' werden über die Kontakte 275^{VII}, 275^{VII}, 275^{XI}, 275^{XII} und über die Kontakte 275^{IX}, 275^{X} für die Messleitungen 249^{V}, 249^{X} an die Trennbox 225 angeschlossen. Abgangsseitig hat die Trennbox 225 die Kontakte 275, 275', 275", 275^{III}, 275^{IV}, 275^{V}. Einige der Kontakte, nämlich die Kontakte 275, 275^{I}, 275^{IV}, 275^{V}, sind für Hochvoltverbindungen gestaltet; es handelt sich also um Hochvoltleitungen. Andere Kontakte, genauer die Kontakte 275", 275^{III}, sind für den Anschluss einer zweiten Steuereinheit 231 in dem Kommunikationsbus 233 gestaltet, also für eine Kleinstspannung. Die zweite Steuereinheit 231 kann mit einem leistungsstärkeren Rechenkern (im Vergleich mit der ersten Steuereinheit 227) ausgestattet sein, sodass die zweite Steuereinheit 231 die Rechenkapazitäten besitzt, um die komplexeren Auswertelogiken 232 durchzuführen.

Elektrische Ströme in der Trennbox 225 können über die Messleitungen 249', 249", 249^{III} gemessen werden. Weil mehrere Messmethoden zur Verfügung stehen (siehe beispielsweise den Mess-Shunt 279; siehe das Strommessgerät "A") kann die Recheneinheit 229 in der ersten Steuereinheit 227 vergleichende Prüfungen und Vergleichsrechnungen durchführen, um so z. B. Abweichungen in den Stromwerten zu detektieren.

Außerdem gibt es in der Trennbox 225 eine Trennelemente-Diagnose 283, die über die Messleitung 249^{IV} mit den entsprechenden Pinnen der Recheneinheit 229 verbunden ist, wodurch die Schaltzustände der Trennelemente 241, 241', 241", 241^{III} und des Vorlade-Schalters 255 detektiert werden können.

Welche Spannungen an den Hochvoltleitungen und an den Kontakten 275, 275^{I}, 275^{IV}, 275^{V} anliegen, kann über die Messleitungen 249^{VI}, 249^{VII}, 249^{VIII}, 249^{IX}, die Spannungsmessleitungen sind, gemessen werden. Die ausgangsseitigen Spannungen können mit den eingangsseitigen Hochspannungen von den Traktionsakkumulatoren 221, 221^{I} verglichen werden, weil es Messleitungen 249, 249^{I} gibt, über die die eingangsseitigen Hochvoltspannungen durch die Recheneinheit 229 gemessen werden können.

Im Falle eines schwereren Unfalls schaltet die Trennbox 225 durch ihre Sicherung 271', die ein Pyro-Fuse ist, den Stromfluss weg. Hierfür gibt es den Kontakt 275^{VI}, über den die Pyro-Fuse 271^{I} ausgelöst werden kann. Auf diese Weise ist eine augenblickliche Stromflussunterbrechung mithilfe der Sicherung 271', ausgelöst über eine Auslösespannung an dem Kontakt 275^{VI}, möglich.

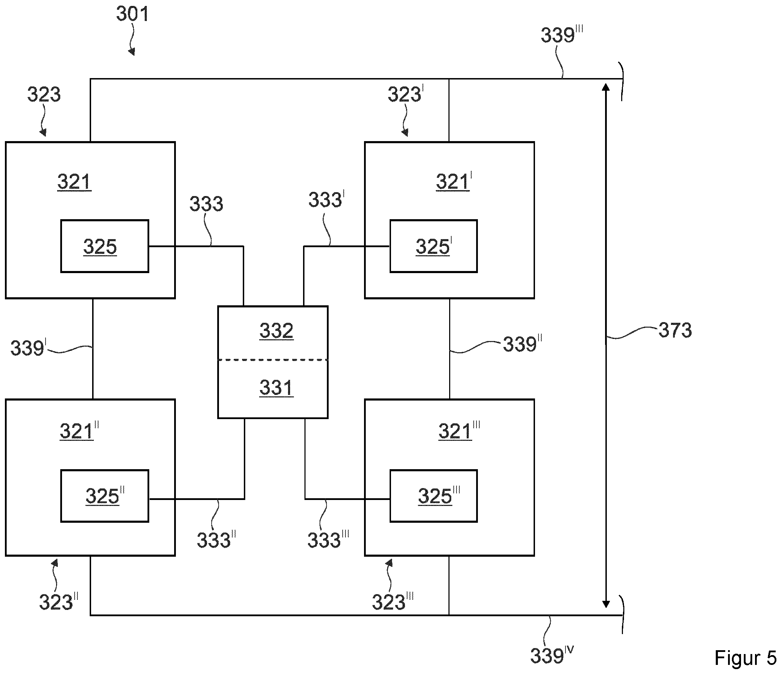

Figur 5 zeigt eine weitere Ausgestaltungsvariante eines (Schwerfahrzeug-)Akkumulatorsystems, das also für höhere Leistungen im Mega-Watt-Bereich ausgelegt ist und sich tatsächlich aus vier Akkumulatorsystemen 323, 323^{I}, 323", 323^{III} zusammensetzt. Das Akkumulatorsystem wird von einer zweiten Steuereinheit 331 als übergreifende Steuereinheit und als Gesamtanalyseeinheit gesteuert und kontrolliert. In der zweiten Steuereinheit 331 befindet sich die eigentliche Logik mit ihren Auswertealgorithmen, die Logik kann also auch als Auswertelogik 332 bezeichnet werden.

Die Sicherheitsvorrichtung 301 umfasst vier Akkumulatorsysteme 323, 323', 323", 323^{III}, die durch ihre Trennboxen 325, 325', 325", 325^{III} über die jeweiligen Kommunikationsbusse 333, 333', 333", 333^{III} mit dem zentralen Steuergerät des Fahrzeugs, der zweiten Steuereinheit 331 verbunden sind. Jedes ist durch seine Trennbox 325, 325', 325", 325^{III} derart geschaltet, dass die parallel und seriell verschalteten Traktionsakkumulatoren 321, 321', 321", 321^{III} nur dann eine Hochspannung 373 an den Hochvoltleitungen 339^{III} und 339^{IV} anliegen lassen, wenn die (nicht eingezeichneten) Trennelemente (vgl. Figuren 2 bis 4) in einem durchgeschalteten Zustand sind. Sind die Trennelemente in einem geöffneten Zustand, so sind die Hochvoltleitungen 339^{III}, 339^{IV} in einem spannungslosen Zustand. Die nach außen geführten Hochvoltleitungen 339^{III}, 339^{IV} können spannungslos geschaltet werden.

Darüber hinaus gibt es zwischen den Akkumulatorsystemen 323, 323^{I}, 323", 323^{III} Hochvoltleitungen 339^{I}, 339", die für die serielle bzw. parallele Verschaltung aller Akkumulatorensysteme 323, 323', 323", 323^{III} benötigt werden.

Erkennt entweder eine der Trennboxen 325, 325', 325", 325^{III} oder die zweite Steuereinheit 331 einen Fehlerfall, einen unerwünschten Zustand und/oder eine Bedingung, der zufolge zumindest einer der Traktionsakkumulatoren 321, 321', 321^{II}, 321^{III} geschützt werden sollte, so werden die nach außen führenden Hochvoltleitungen 339^{III}, 339^{IV} abgeschaltet. Ein Kraftfahrzeugantriebsstrang (wie z. B. der Kraftfahrzeugantriebsstrang 5 gemäß Figur 1) kann keinen Strom mehr aus den Traktionsakkumulatoren 321, 321^{I}, 321^{II}, 321^{III} ziehen. Die Hochspannung 373 liegt nicht mehr an. Eine Reparatur oder Wartung des Fahrzeuges kann unproblematisch durchgeführt werden, ohne dass der die Arbeiten ausführende Kfz-Mechaniker (Kfz-Mechatroniker) gefährdet wird, solange die Kontakte oder Pinne innerhalb der Traktionsakkumulatoren 321, 321^{I}, 321^{II}, 321^{III} durch Entfernen der Trennboxen 325, 325', 325°, 325^{III} nicht freigelegt werden.

Elektrisch angetriebene Kraftfahrzeuge 3 (siehe Figur 1) werden sicherer, wenn diese eine Trennbox 25 ("BDU") als integrierter Bestandteil des Traktionsakkumulators 21 des Kraftfahrzeugs 3 haben, wobei die Trennbox 25 als Ort der Messaufnahme für Parameter des Traktionsakkumulators 3 und als Ort der Messaufnahme der für den Antrieb bzw. des Antriebsstrangs 5 zur Verfügung stehenden elektrischen Leistungen gestaltet sein kann, während die übrigen Steuereinheiten 31 für komplexere Auswertungen der Messparameter und der Messwerte gestaltet sein können.

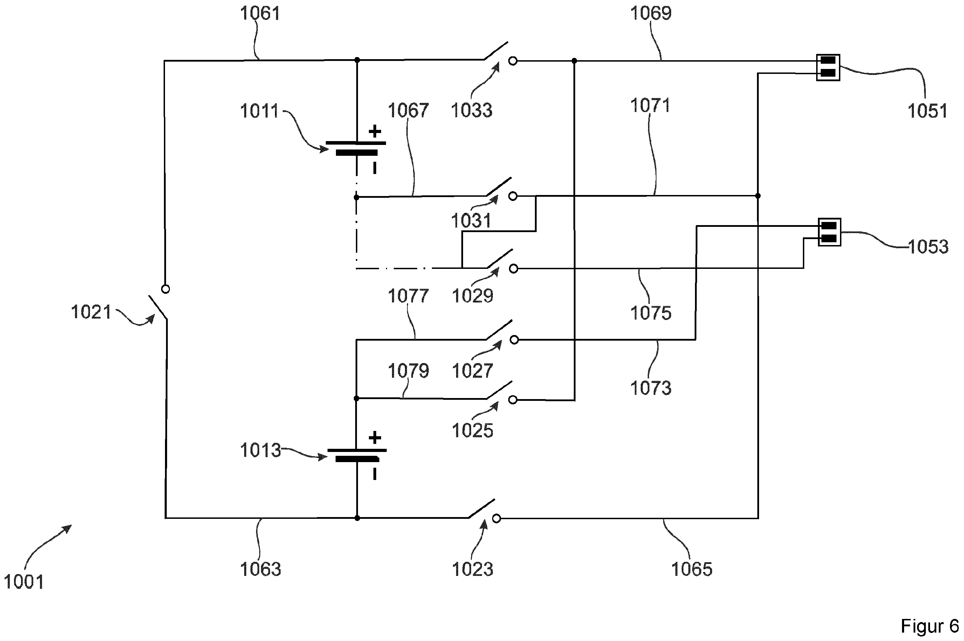

Figur 6 zeigt eine erste Ausführungsvariante eines Energieversorgungssystems 1001 mit dazugehöriger Schaltvorrichtung für ein Kraftfahrzeug, wobei die Schaltvorrichtung in einer Trennbox (siehe z. B. Trennbox 225 gem. Figur 4) integriert sein kann.

Wie dem Prinzipschaltplan gem. Figur 6 zu entnehmen ist, führen Leitungen 1069, 1071, 1075, 1073, 1065 von den Kontakten 1051, 1053 zu den Schaltern 1023, 1025, 1027, 1029, 1031, 1033. Die Schalter 1023, 1025, 1027, 1029, 1031, 1033 verbinden Leitungsabschnitt bzw. Leitungen 1065, 1069, 1071, 1073, 1075 zu weiterführenden Leitungen 1061, 1063, 1067, 1077, 1079, um Verbindungen zu den Traktionsakkumulatoren 1011, 1013 herzustellen. Durch die Schaltzustände der Schalter 1021, 1023, 1025, 1027, 1029, 1031, 1033 können die Traktionsakkumulatoren 1011, 1013 für eine höhere Spannung oder für einen größeren Strom verschaltet werden. Hierdurch kann die Ladegeschwindigkeit und die (elektrische) Last an den Kontakten 1051, 1053 eingestellt werden.

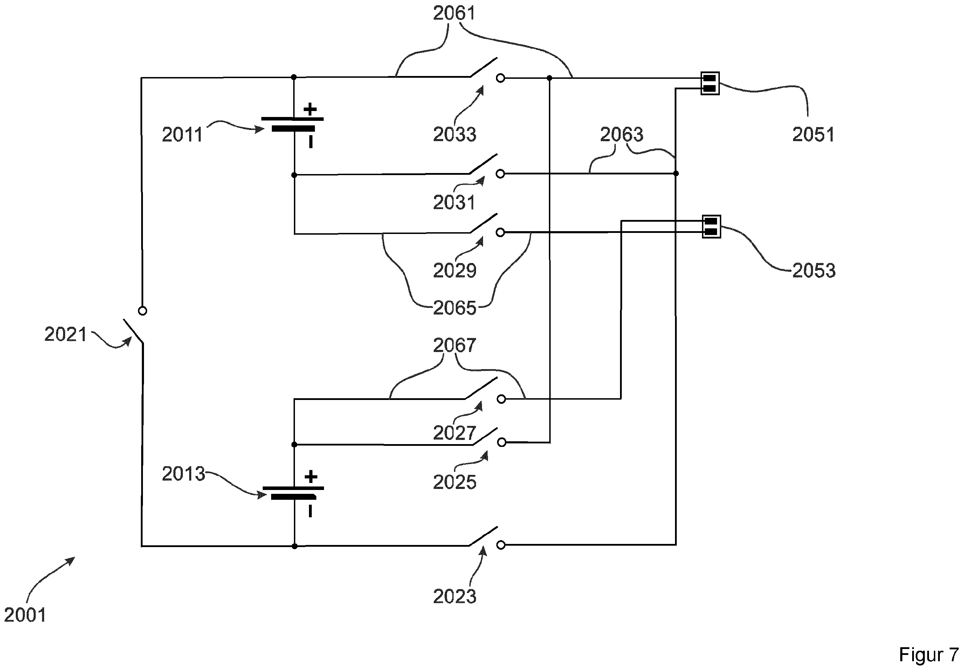

Figur 7 zeigt eine zweite Ausführungsform eines Energieversorgungssystems 2001 mit dazugehöriger Schaltvorrichtung für ein Kraftfahrzeug (siehe das in Figur 1 dargestellte Kraftfahrzeug 3), das in einer Trennbox (siehe die in Figur 1 dargestellte Trennbox 25) derart integriert sein kann, dass die ebenfalls dargestellten Traktionsakkumulatoren 2011, 2013 über die Kontakte 2051, 2053 geladen werden können. Die Schalter erster Schalter bis siebter Schalter 2021, 2023, 2025, 2027, 2029, 2031, 2033 können von einem Parallelladebetrieb in einen Serienladebetrieb umschalten.

Wie weiterhin in Figur 7 zu sehen ist, verbindet die erste Leitung 2061 mit dem siebten Schalter 2033 den einen Pin des Kontakts 2051 mit dem positiven Pol des einen Teils des Traktionsakkumulators 2011. Die zweite Leitung 2063 ist eine Leitung, die sowohl über den sechsten Schalter 2031 mit dem negativen Pol des einen Teils des Traktionsakkumulators 2011 als auch über den zweiten Schalter 2023 mit dem negativen Pol des anderen Teils des Traktionsakkumulators 2013 eine Verbindung zu einem zweiten Pin des Kontakts 2015 herstellen kann. Eine dritte Leitung 2065 ist eine Verbindungsleitung zwischen dem zweiten Kontakt 2053 und dem negativen Pol des einen Teils des Traktionsakkumulators 2011, wobei der Kontakt über den fünften Schalter 2029 abgekoppelt werden kann. Die vierte Leitung 2067 ist eine Verbindungsleitung zwischen dem zweiten Kontakt 2053, genauer dem ersten Pin des Kontakts 2053, und dem positiven Pol des anderen Teils des Traktionsakkumulators 2013. Der vierte Schalter 2027 kann die Verbindung zwischen dem zweiten Kontakt 2053 und dem positiven Pol an dem Traktionsakkumulator 2013 unterbrechen.

Figur 8 zeigt eine dritte Ausführungsform eines Energieversorgungssystems 3001 mit dazugehöriger Schaltvorrichtung für ein Kraftfahrzeug, das in einer Trennbox (siehe z. B. Trennbox 125 gem. Figur 3) integriert sein kann.

Die in Figur 8 gezeigten Akkumulatoren 3011 und 3013 sind über Schmelzsicherungen 3035, 3037, 3039, 3041 auf die weiterführenden Leitungen 3061^{I}, 3063^{I}, 3065^{I}, 3067^{I}, 3061^{II}, 3063^{II} geführt. In der ersten Leitung 3061, 3061^{I} sitzt der siebte Schalter 3033 bzw. unterbricht diese Leitung wahlweise in einen ersten und in einen zweiten Leitungsabschnitt. In der zweiten Leitung 3063, 3063^{I} sitzt der sechste Schalter 3031. Der sechste Schalter 3031 verbindet den ersten Teil der zweiten Leitung 3063 mit einem zweiten Teil der zweiten Leitung 3063'. Werden der siebte Schalter 3033 und der sechste Schalter 3031 geschlossen, kann elektrische Energie von dem ersten Kontakt 3051 zu dem ersten Traktionsakkumulator 3011 bzw. zu dem ersten Teil des Traktionsakkumulators geleitet werden, damit dessen Zellen elektrisch aufgeladen werden. Ein fünfter Schalter 3029 sitzt in der dritten Leitung 3065, 3065'. Auf diese Weise ist ein Anschluss an den zweiten Kontakt 3053 möglich, genauer der negativen Seite des Akkumulators 3011. Ein vierter Schalter 3027, ein dritter Schalter 3025 und ein zweiter Schalter 3023 verbinden den zweiten (Teil-)Akkumulator 3013 wahlweise mit den Kontakten 3051, 3053. Der zweite Schalter 3023 ist in der zweiten Leitung 3063, 3063^{II} eingebaut. Der dritte Schalter 3025 und der vierte Schalter 3027 sind parallel an den positiven Pol des zweiten (Teil-)Akkumulators 3013 geführt. Der siebte Schalter 3033 und der dritte Schalter 3025 entscheiden durch ihre Schaltstellung (offen oder geschlossen), ob elektrische Spannung an dem ersten Kontakt 3051 auf den positiven Pol des ersten (Teil-)Akkumulators 3011 oder auf den positiven Pol des zweiten (Teil-)Akkumulators 3013 geführt wird. Mit dem ersten Schalter 3021 lassen sich die beiden (Teil-)Akkumulatoren 3011, 3013 in Serie verschalten.

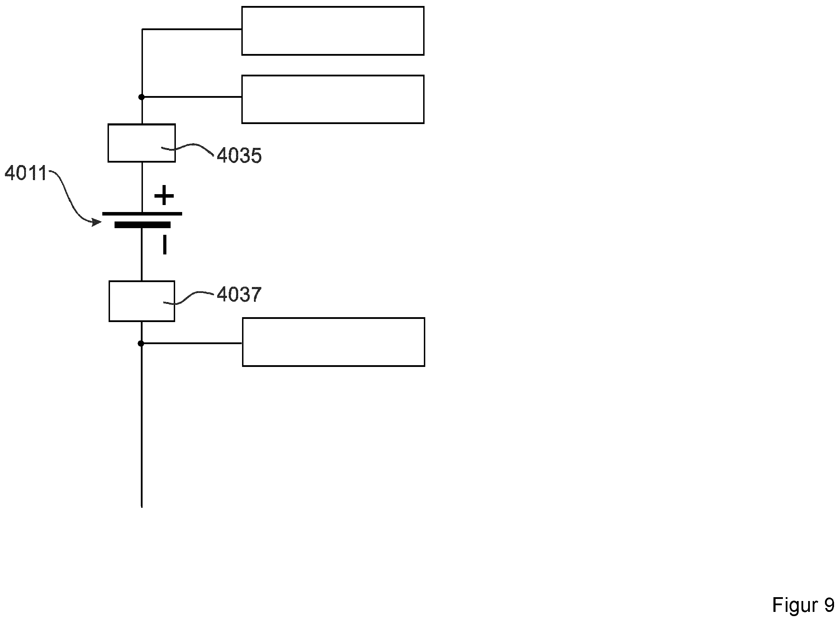

Figur 9 zeigt einen Ausschnitt, der als Alternative in eine der zuvor gezeigten Energieversorgungseinrichtungen 1001, 2001, 3001 eingebaut werden kann. Der in einer alternativen Ausführungsvariante realisierte (Teil-)Traktionsakkumulator 4011 (bzw. wiederaufladbare Energiespeicher) ist durch eine Schmelzsicherung 4035 und durch einen Überstromschutz 4037 mit einem integrierten Stromsensor vor Schäden durch Überströme geschützt. Natürlich ist es auch möglich, nur eine Schmelzsicherung 4035 oder nur einen Überstromschutz 4037 zu verbauen. Ggf. kann der zweite Pol des Traktionsakkumulators 4011 ohne weitere Strombegrenzungsmaßnahme ausgeführt sein.

Die in den Figuren 6 bis 9 gezeigten Energieversorgungssysteme 1001, 2001, 3001 sind mit wenigstens einem ersten Traktionsakkumulator 1011, 2011, 3011 und mit wenigstens einem zweiten Traktionsakkumulator 1013, 2013, 3013 ausgestattet. Die Traktionsakkumulatoren 1011, 2011, 3011, 1013, 2013, 3013 werden in einem ersten Schaltzustand durch leistungsschaltende Elemente, wie die Schalter 2021, 2023, 2025, 2027, 2029, 2031, 2033 (siehe Figur 7) für elektrische Leistungsschaltungen, z. B. IGBTs, MOS-Fets, Schütze und/oder Relais, in eine Parallelverschaltung und in einem zweiten Schaltzustand durch die leistungsschaltenden Elemente, wie die Schalter 2021, 2023, 2025, 2027, 2029, 2031, 2033, in eine Reihenverschaltung verbracht. Der erste Traktionsakkumulator 1011, 2011, 3011 und der zweite Traktionsakkumulator 1013, 2013, 3013 können durch die Schalter 1021, 1023, 1025, 1027, 1029, 1031, 1033, 2021, 2023, 2025, 2027, 2029, 2031, 2033, 3021, 3023, 3025, 3027, 3029, 3031, 3033 in unterschiedliche Schaltzustände versetzt werden, sodass über die Trennbox (siehe z. B. Trennbox 25 gem. Figur 1) die Traktionsakkumulatoren 1011, 2011, 3011, 1013, 2013, 3013 in Abhängigkeit von einer Ladespannung an den Kontakten 1051, 1053, 2051, 2053 (Detektion, ob eine niedrigere oder eine höhere Ladespannung anliegt) wieder aufgeladen werden können.

An einem negativen Pol des ersten Traktionsakkumulators 1011, 2011, 3011 gibt es direkt oder indirekt zwei leistungsschaltende Elemente 1029, 1031, 2029, 2031, 3029, 3031, z. B. als Serienverschaltung. Die zwei leistungsschaltenden Elemente 1029, 1031, 2029, 2031, 3029, 3031 sind am negativen Pol angeschlossen.

An einem negativen Pol des zweiten Traktionsakkumulators 1013, 2013, 3013 gibt es zwei leistungsschaltende Elemente 1021, 1023, 2021, 2023, 3021, 3023. Die leistungsschaltenden Elemente 1021, 1023, 2021, 2023, 3021, 3023 sind auch am negativen Pol des zweiten Traktionsakkumulators 1013, 2013, 3013 angebracht.

Die leistungsschaltenden Elemente 1021, 1023, 2021, 2023, 3021, 3023 bilden mit dem zweiten Traktionsakkumulator 1013, 2013, 3013 eine Sternschaltung mit einem Sternpunkt als Knoten zwischen dem negativen Pol des zweiten Traktionsakkumulators 1013, 2013, 3013 und jeweils einer Schalter-Hoch-Seite der beiden leistungsschaltenden Elemente 1021, 1023, 2021, 2023, 3021, 3023.

Das in den Figuren 6 bis 9 gezeigte Energieversorgungssystem 1001, 2001, 3001 hat mehrere erste Traktionsakkumulatoren 1011, 2011, 3011 und mehrere zweite Traktionsakkumulatoren 1013, 2013, 3013. Ein solches Energieversorgungssystem 1001, 2001, 3001 besitzt mehrere erste Traktionsakkumulatoren 1011, 2011, 3011 und mehrere zweite Traktionsakkumulatoren 1013, 2013, 3013, von denen vorzugsweise jeweils ein erster Traktionsakkumulator 1011, 2011, 3011 und ein zweiter Traktionsakkumulator 1013, 2013, 3013 in Bezug auf ihr Arrangement zueinander in eine Parallelanordnung in einem der ersten Schaltzustände und in Bezug auf ihr Arrangement zueinander in eine Serienanordnung verbringbar sind.

An einem (ersten) Kontakt 1051, 2051, 3051 des Energieversorgungssystems 1001, 2001, 3001, das aus den Figuren 6 bis 9 bekannt ist, kann eine erste Spannung angeschlossen werden. An einem zweiten Kontakt 1053, 2053, 3053 des Energieversorgungssystems 1001, 2001, 3001 kann eine zweite Spannung angeschlossen werden.

Es ist vorteilhaft, wenn die erste Spannung im Bereich von 40 % bis 60 % der zweiten Spannung liegt.

Das Energieversorgungssystem 1001, 2001, 3001 ist für ein Spannungsniveau von 400 Volt und für ein Spannungsniveau von 800 Volt ausgelegt. In einer alternativen Ausgestaltung ist das Energieversorgungssystem 1001, 2001, 3001 für ein Spannungsniveau von 800 Volt und für ein Spannungsniveau von 1600 Volt ausgelegt. Generell kann gesagt werden, die Energieversorgungssysteme sind jeweils für ein niedrigeres und für ein höheres Spannungsniveau gestaltet, vorzugsweise mit einem Verhältnis bzw. mit einem Faktor von 2 zwischen den beiden Spannungsniveaus "niedrigeres Spannungsniveau" und "höheres Spannungsniveau".

An positiven Polen des ersten Traktionsakkumulators 1011, 2011, 3011 und/oder des zweiten Traktionsakkumulators 1013, 2013, 3013 ist ein Überstromschutz vorhanden.

An den negativen Polen des ersten Traktionsakkumulators 1011, 2011, 3011 und/oder des zweiten Traktionsakkumulators 1013, 2013, 3013 ist ein Stromsensor angeschlossen.

Die in den einzelnen Figuren gezeigten Ausgestaltungsmöglichkeiten lassen sich auch untereinander in beliebiger Form verbinden.

Das Akkumulatorsystem kann für mehr als vier Traktionsakkumulatoren gestaltet sein.

Die erste Steuereinheit kann mehr als drei Spannungseingänge umfassen. In einer reduzierten Form kann die erste Steuereinheit aber auch mit einem einzigen Spannungseingang ausgestattet sein.

Die erste Steuereinheit kann auch mehr als einen Busanschluss besitzen.

Die erste Steuereinheit kann auch mit anderen als den vorgestellten Prozessortypen ausgestattet sein; wobei das Konzept der verteilten Sicherheit einen Vorteil dadurch entfaltet, dass die Rechenanforderungen an die Recheneinheit der ersten Steuereinheit generell niedriger gehalten werden als z. B. die Rechenanforderungen an ein zentrales Fahrzeugsteuergerät.

### Bezugszeichenliste

| | |
|---|---|
| 1, 301 | Sicherheitsvorrichtung |
| 3 | Fahrzeug |
| 5 | Antriebsstrang |
| 7 | erstes Rad |
| 9 | zweites Rad |
| 11 | Motor |
| 13 | Achse |
| 15 | Wechselrichter, insbesondere mit einem Zwischenkreis mit einem Zwischenkreiskondensator |
| 21, 21^{I}, 121, 221, 221', 321, 321', 321^{II}, 321^{III} | Traktionsakkumulator |
| 23, 23^{I}, 123, 223, 323, 323^{I}, 323^{II}, 323^{III} | Akkumulatorsystem |
| 25,125,225, 325, 325^{I}, 325^{II}, 325^{III} | Trennbox |
| 27, 127, 227 | erste Steuereinheit |
| 29, 129, 229 | Recheneinheit |
| 31, 131, 231, 331 | zweite Steuereinheit |
| 32, 132, 232, 332 | Auswertelogik |
| 33, 33^{I}, 133, 133^{I}, 233, 333, 333^{I}, 333^{II}, 333^{III} | Kommunikationsbus |
| 35 | Kommunikatiosbusanschluss, insbesondere in der ersten Steuereinheit |
| 37 | Kommunikatiosbusanschluss, insbesondere in der zweiten Steuereinheit |
| 39 | Energieversorgungskabelstrang, insbesondere Bündel von Hochvoltleitungen |
| 39', 39°, 39^{III}, 39^{IV}, 139^{I}, 139^{II}, 139^{III}, 139^{IV}, 339^{I}, 339^{II}, 339^{III}, 339^{IV} | Energieversorgungskabel, insbesondere Hochvoltleitung |
| 41, 41^{I}, 141, 141', 141^{II}, 141^{III}, 241, | Trennelement |
| 241^{I}, 241^{II}, 241^{III} | |
| 43, 43^{I} | erster Pol, insbesondere Plus-Pol des Traktionsakkumulator |
| 45, 45^{I} | Zweiter Pol, insbesondere Minus-Pol des Traktionsakkumulator |
| 47 | Hochvolt-Spannungs-und-Mess-Einheit |
| 49, 49^{I}, 49^{II}, 49^{III}, 49^{IV}, 49^{V}, 49^{VI}, 149, 149^{I}, 149^{II}, 149^{III}, 149^{IV}, 149^{V}, 149^{VI}, 149^{VII}, 149^{VIII}, 149^{IX}, 249, 249^{I}, 249^{II}, 249^{III}, 249^{IV}, 249^{V}, 249^{VI}, 249^{VII}, 249^{VII}, 249^{IX}, 249^{X} | Messleitung |
| 51, 151 | Vorlade-Einheit |
| 53, 153, 253 | Vorlade-Widerstand |
| 55, 155, 255 | Vorlade-Schalter |
| 57, 57^{I}, 57^{II} | Schalter-Treiber |
| 61 | Fehleranalyse-Modul |
| 63 | Kommunikationsmodul |
| 65 | Trennbox-Analyse-Modul |
| 67 | Widerstands-und-Isolations-Mess-Modul |
| 69 | Schaltersteuerung |
| 71, 71', 171, 171', 271, 271', 271" | Sicherung |
| 373 | Hochspannung |
| 175, 175', 175", 175^{III}, 175^{IV}, 175^{V}, 175^{VI}, 175^{VII}, 175^{VIII}, 175^{IX}, 275, 275^{I}, 275^{II}, 275^{III}, 275^{IV}, 275^{V}, 275^{VI}, 275^{VII}, 275^{VIII}, 275^{IX}, 275^{X}, 275^{XI}, 275^{XII} | Kontakt bzw. Pin |
| 277, | erster Spannungsniveau-Schalter |
| 277^{I} | zweiter Spannungsniveau-Schalter |
| 277^{II} | dritter Spannungsniveau-Schalter |
| 179, 279 | Shunt, insbesondere für eine Strommessung |
| 181, 283 | Trennelemente-Diagnose |
| 183,183' 183^{II}, 183^{III} | Zell-Monitoring |
| 1001, 2001, 3001 | Energieversorgungssystem, insbesondere eines Kraftfahrzeugs mit Umschaltvorrichtung |
| 1011, 2011, 3011, 4011 | erster (wiederaufladbarer) Energiespeicher |
| 1013, 2013, 3013 | zweiter (wiederaufladbarer) Energiespeicher |
| 1021, 2021, 3021 | erster Schalter |
| 1023, 2023, 3023 | zweiter Schalter |
| 1025, 2025, 3025 | dritter Schalter |
| 1027, 2027, 3027 | vierter Schalter |
| 1029, 2029, 3029 | fünfter Schalter |
| 1031, 2031, 3031 | sechster Schalter |
| 1033, 2033, 3033 | siebter Schalter |
| 3035, 4035 | erste Schmelzsicherung |
| 3037, 4037 | Überstromschutz, wie zweite Schmelzsicherung, insbesondere mit Stromsensor |
| 3039 | dritte Schmelzsicherung |
| 3041 | Überstromschutz, wie vierte Schmelzsicherung, insbesondere mit Stromsensor |
| 1051, 2051, 3051 | erster Kontakt (insbesondere zweipolig) |
| 1053, 2053, 3053 | zweiter Kontakt (insbesondere zweipolig) |
| 1061, 2061, 3061, 3061', 3061" | erste Leitung |
| 1063, 2063, 3063, 3063^{I}, 3063" | zweite Leitung |
| 1065, 2065, 3065, 3065^{I} | dritte Leitung |
| 1067, 2067, 3067, 3067^{I} | vierte Leitung |
| 1069 | fünfte Leitung |
| 1071 | sechste Leitung |
| 1073 | siebte Leitung |
| 1075 | achte Leitung |
| 1077 | neunte Leitung |
| 1079 | zehnte Leitung |

## Patentansprüche

1. Sicherheitsvorrichtung (1, 301) eines elektrisch angetriebenen Fahrzeugs (3), insbesondere eines Antriebsstrangs (5) eines elektrisch angetriebenen Fahrzeugs (3), mit einer Trennbox (25, 125, 225, 325, 325^{I}, 325^{II}, 325^{III}),
die eine erste Steuereinheit (27, 127, 227) mit einer Recheneinheit (29, 129, 229) und mit einem Kommunikationsbusanschluss (35, 37) umfasst
und die für eine Durchleitung von elektrischer Leistung an ihre weiterführenden Kontakte (175, 175', 175^{II}, 175^{III}, 175^{IV}, 175^{V}, 275, 275^{I}, 275^{II}, 275^{III}, 275^{IV}, 275^{V}) gestaltet ist,
wobei insbesondere die durch die Trennbox (25, 125, 225, 325, 325', 325", 325^{III}) durchzuleitende elektrische Leistung im Bereich von Kilo-Watt und/oder im Bereich von Mega-Watt liegt,
und mit einer zweiten Steuereinheit (31, 131, 231, 331),
wobei die erste Steuereinheit (27, 127, 227) für die Ausführung eines Messprogramms in der Recheneinheit (29, 129, 229) gestaltet ist,
durch das von den Messsensoren (179, 279) der Trennbox (25, 125, 225, 325, 325', 325", 325^{III}) eingelesene Messwerte und/oder Messwerte des Traktionsakkumulators (21, 21', 121, 221, 221', 321, 321', 321^{II}, 321^{II}) in regelmäßigen Abständen aufbereitbar sind,
**dadurch gekennzeichnet, dass**
die Trennbox (25, 125, 225, 325, 325', 325", 325^{III}) dazu eingerichtet ist,
unmittelbar an einem Traktionsakkumulator (21, 21^{I}, 121, 221, 221^{I}, 321, 321^{I}, 321^{II}, 321^{III}) des Fahrzeugs (3) angebracht zu werden, wodurch elektrische Kontakte (175, 175', 175^{II}, 175^{III}, 175^{IV}, 175^{V}, 175^{VII}, 175^{VIII}, 175^{IX}, 275, 275', 275^{II}, 275^{III}, 275^{IV}, 275^{V}, 275^{VII}, 275^{VIII}, 275^{IX}, 275^{X}, 275^{XI}, 275^{XII}) der Trennbox (25, 125, 225, 325, 325', 325^{II}, 325^{III}) anschließbar sind, und
die Trennbox (25, 125, 225, 325, 325', 325", 325^{III}) des Weiteren dazu eingerichtet ist, jeden angeschlossenen elektrischen Kontakt (175, 175^{I}, 175^{II}, 175^{III}, 175^{IV}, 175^{V}, 175^{VII}, 175^{VIII}, 175^{IX}, 275, 275', 275", 275^{III}, 275^{IV}, 275^{V}, 275^{VII}, 275^{VIII}, 275^{IX}, 275^{X}, 275^{XI}, 275^{XII}) vor einem unmittelbaren Zugriff zu schützen,
indem die elektrische Trennbox (25, 125, 225, 325, 325', 325", 325^{III}) mit wenigstens zwei Trennelementen (41, 41^{I}, 141, 141', 141^{II}, 141^{III}, 241, 241^{I}, 241^{II}, 241^{III}) ausgestattet ist,
und indem die Trennbox (25, 125, 225, 325, 325', 325", 325^{III}) dazu eingerichtet ist,
an wenigstens zwei elektrischen Kontakten (175^{VII}, 175^{VIII}, 175^{IX}, 275^{VII}, 275^{VIII}, 275^{IX}, 275^{X}, 275^{XI}, 275^{XII}) des Traktionsakkumulators (21, 21', 121, 221, 221^{I}, 321, 321^{I}, 321^{II}, 321^{II}) zugleich angeschlossen zu werden,
und dass die Messwerte an dem Kommunikationsbusanschluss (35, 37) für die zweite Steuereinheit (31, 131, 231, 331) zur Verfügung stellbar sind,
wobei insbesondere in der zweiten Steuereinheit (31, 131, 231, 331) eine Auswertelogik implementiert ist und/oder
insbesondere die Trennbox (25, 125, 225, 325, 325', 325", 325^{III}) für eine selbständige Unterbrechung der Weiterleitung elektrischer Leistung in Reaktion auf von der Trennbox (25, 125, 225, 325, 325', 325", 325^{III}) ermittelte Messwerte gestaltet ist.

2. Sicherheitsvorrichtung (1, 301) nach Anspruch 1,
**dadurch gekennzeichnet, dass**
die zweite Steuereinheit (31, 131, 231, 331) ein Niedervoltsteuergerät ist, insbesondere für ein Spannungsfeld von maximal 60 Volt, idealerweise von weniger als 24 Volt,
wobei vorzugsweise die zweite Steuereinheit (31, 131, 231, 331) ein schaltausgangsfreies, insbesondere keine Treiber für Schaltausgänge aufweisendes, vorzugsweise ohne Aktuatorenschalter aufgebautes, Steuergerät ist.

3. Sicherheitsvorrichtung (1, 301) nach einem der vorhergehenden Ansprüche,
**dadurch gekennzeichnet, dass**
die Trennbox (25, 125, 225, 325, 325', 325", 325^{III}) einen Hochvoltteil umfasst, also für elektrische Spannungen in einem Bereich von mehr als 60 Volt.

4. Sicherheitsvorrichtung (1, 301) nach einem der vorhergehenden Ansprüche,
**dadurch gekennzeichnet, dass**
die Auswertelogik in der zweiten Steuereinheit (31, 131, 231, 331) für eine Ladungszustandsberechnung und/oder für eine Gesundheitszustandsberechnung des anschließbaren Traktionsakkumulators (21, 21', 121, 221, 221', 321, 321', 321", 321^{III}) auf Basis von Messdaten der Trennbox (25, 125, 225, 325, 325', 325", 325^{III}) gestaltet ist.

5. Sicherheitsvorrichtung (1, 301) nach einem der vorhergehenden Ansprüche,
**dadurch gekennzeichnet, dass**
der Kommunikationsbus (33, 33^{I}, 133, 133^{I}, 233, 333, 333^{I}, 333^{II}, 333^{III}) ein Niedervoltkommunikationsbus, z. B. ein Zwei-Draht-Bus wie ein CAN-Bus, ist,
der vorzugsweise galvanisch getrennt gegenüber seinen Kommunikationsteilnehmern, zumindest gegenüber der Trennbox (25, 125, 225, 325, 325^{I}, 325^{II}, 325^{III}), ausgeführt ist.

6. Sicherheitsvorrichtung (1, 301) nach einem der vorhergehenden Ansprüche,
**dadurch gekennzeichnet, dass**
die Trennbox (25, 225, 325, 325^{I}, 325^{II}, 325^{III}) ohne Schaltkreise und ohne Programmteile für eine Auswertelogik realisiert ist,
jedoch einen oder mehrere Schaltkreise umfasst,
die Messsignale aufbereiten können und/oder eine Datenkommunikation über den Kommunikationsbus (33, 33^{I}, 233, 333, 333^{I}, 333^{II}, 333^{III}) durchführen können und/oder eine Notabschaltung mittels der Trennelemente (41, 41', 241, 241', 241", 241^{III}) realisieren können.

7. Sicherheitsvorrichtung (1, 301) nach einem der vorhergehenden Ansprüche,
**dadurch gekennzeichnet, dass**
die Trennbox (25, 125, 225, 325, 325', 325", 325^{III}) dazu eingerichtet ist,
durch Befehle,
die über den Kommunikationsbusanschluss (35, 37) der Trennbox (25, 125, 225, 325, 325', 325", 325^{III}) dargeboten werden,
wenigstens eines der Trennelemente (41, 41^{I}, 141, 141^{I}, 141^{II}, 141^{III}, 241, 241^{I}, 241^{II}, 241^{III}) in einen geöffneten Zustand zu versetzen,
wodurch insbesondere der Traktionsakkumulator (21, 21', 121, 221, 221', 321, 321', 321^{II}, 321^{III}) von den weiterführenden Kontakten (175, 175', 175", 175^{III}, 175^{IV}, 175^{V}, 275, 275^{I}, 275", 275^{III}, 275^{IV}, 275^{V}) getrennt wird.

8. Sicherheitsvorrichtung (1, 301) nach einem der vorhergehenden Ansprüche,
**dadurch gekennzeichnet, dass**
die Trennbox (25, 125, 225, 325, 325', 325", 325^{III}) eine Vorladekomponente umfasst, die insbesondere einen widerstandbehafteten, vorzugsweise schaltbaren, Strompfad für ein Aufladen eines Zwischenkreiskondensators eines an den weiterführenden Kontakten (175, 175', 175^{II}, 175^{III}, 175^{IV}, 175^{V}, 275, 275^{I}, 275", 275^{III}, 275^{IV}, 275^{V}) anzuschließenden Spannungswandlers (15) aufweist.

9. Sicherheitsvorrichtung (1, 301) nach einem der vorhergehenden Ansprüche,
**dadurch gekennzeichnet, dass**
die Trennbox (25, 125, 225, 325, 325^{I}, 325^{II}, 325^{III}) eine Logik für ein Schalten wenigstens eines der Trennelemente (41, 41^{I}, 141, 141^{I}, 141^{II}, 141^{III}, 241, 241^{I}, 241^{II}, 241^{III}), vorzugsweise von zwei der Trennelemente (41, 41^{I}, 141, 141^{I}, 141^{II}, 141^{III}, 241, 241', 241", 241^{III}), aufweist,
die bei einem fehlerhaften externen Befehl, die bei einem fehlerhaften Messwert, die bei einem außerhalb von Toleranzgrenzen angesiedelten Messwert und/oder die bei einem nicht vorhandenen Messwert ein Öffnen des wenigstens einen Trennelements (41, 41', 141, 141', 141^{II}, 141^{III}, 241, 241', 241^{II}, 241^{III}) sicherstellt, vorzugsweise innerhalb eines Zeitraums von weniger als 5 ms.

10. Sicherheitsvorrichtung (1, 301) nach einem der vorhergehenden Ansprüche,
**dadurch gekennzeichnet, dass**
sowohl in der Trennbox (25, 125, 225, 325, 325', 325", 325^{III}) als auch in der zweiten Steuereinheit (31, 131, 231, 331) Algorithmen implementiert sind, die eine Validierung des Traktionsakkumulators (21, 21^{I}, 121, 221, 221^{I}, 321, 321^{I}, 321^{II}, 321^{II}) vornehmen,
wobei die Trennbox (25, 125, 225, 325, 325', 325", 325^{III}) vorrangig Grenzwertanalysen und/oder maximal 100 Takte umfassende Grenzwertprüfungen einzelner Messwerte durchführt,
während die zweite Steuereinheit (31, 131, 231, 331) vorzugsweise mehr als 100 Takte umfassende Analysen von mehr als einem Messwert, insbesondere kombinierte Messwertanalysen, vornimmt.

11. Sicherheitsvorrichtung (1, 301) nach einem der vorhergehenden Ansprüche,
**dadurch gekennzeichnet, dass**
die Trennbox (25, 125, 225, 325, 325', 325", 325^{III}) eine Überwachung umfasst,
die vorzugsweise Komponenten, Bauteile, den Traktionsakkumulator (21, 21', 121, 221, 221', 321, 321^{I}, 321^{II}, 321^{III}) und/oder Steuereinheiten (27, 31, 127, 131, 227, 231, 331) anhand von Messwerten in der Trennbox (25, 125, 225, 325, 325', 325", 325^{III}) auf Funktionstüchtigkeit überwacht.

12. Sicherheitsvorrichtung (1, 301) nach einem der vorhergehenden Ansprüche,
**dadurch gekennzeichnet, dass**
die Trennbox (25, 125, 225, 325, 325', 325^{II}, 325^{III}) Sicherungen (71, 71', 171, 171', 271, 271', 271") wie Pyro-Fuses (171^{I}, 271^{I}), Schmelzsicherungen (71), Überstromschütze oder Keramiksicherungen in einer Hochvoltleitung (39, 39^{I}, 39^{II}, 39^{III}, 39^{IV}, 139^{I}, 139", 139^{III}, 139^{IV}, 339^{I}, 339^{II}, 339^{III}, 339^{IV}) umfasst.

13. Sicherheitsvorrichtung (1, 301) nach einem der vorhergehenden Ansprüche,
**dadurch gekennzeichnet, dass**
die Trennbox (25, 125, 225, 325, 325', 325", 325^{III}) zwei, vorzugsweise galvanisch voneinander getrennte, Spannungsbereiche aufweist, einen Niedervoltbereich und einen Hochvoltbereich.

14. Sicherheitsvorrichtung (1, 301) nach einem der vorhergehenden Ansprüche,
**dadurch gekennzeichnet, dass**
die Sicherheitsvorrichtung (1, 301) mehr als eine Trennbox (25, 125, 225, 325, 325^{I}, 325^{II}, 325^{III}) und mehr als einen Traktionsakkumulator (21, 21', 121, 221, 221', 321, 321', 321^{II}, 321^{III}) umfasst.

15. Sicherheitsvorrichtung (1, 301) nach einem der vorhergehenden Ansprüche,
**dadurch gekennzeichnet, dass**
die Trennbox (25, 125, 225, 325, 325^{I}, 325^{II}, 325^{III}) eine Spannungswechselvorrichtung für unterschiedliche Ausgangsspannungen umfasst.

16. Verfahren zur Steuerung eines mit einem Elektromotor (11) ausgestatteten Kraftfahrzeugs (3),
insbesondere mit einer Sicherheitsvorrichtung (1, 301) nach einem der vorhergehenden Ansprüche,
bei dem eine Trennbox (25, 125, 225, 325, 325', 325", 325^{III}) für eine Steuerung von Trennelementen (41, 41^{I}, 241, 241', 241", 241^{III}) zuständig ist,
die aufgrund von Grenzwertüberwachungen in einer ersten Steuereinheit (27, 127, 227) der Trennbox (25, 125, 225, 325, 325', 325", 325^{III}) oder aufgrund von Messwertanalysen in einer zweiten, insbesondere von der ersten Steuereinheit (27, 127, 227) delozierten, Steuereinheit (31, 131, 231, 331), die eine Auswertelogik (32, 132, 232, 332) besitzt, eine Schnelltrennung, insbesondere innerhalb eines Zeitraums von weniger als 5 ms, in den Hochvoltleitungen (39^{I}, 39^{II}, 39^{III}, 39^{IV}, 139^{I}, 139^{II}, 139^{III}, 139^{IV}, 339', 339", 339^{III}, 339^{IV}) vornimmt.
